# EUROPEAN PATENT SPECIFICATION

(11) **EP 4 080 744 B1**
(45) Date of publication and mention of the grant of the patent: **18.11.2026**
(21) Application number: 21744146.8
(22) Date of filing: 21.01.2021
(51) Int. Cl.: B32B 5/02, F16H 49/00, H02K 1/22, H02K 15/02, H02K 49/10, B32B 3/18, B32B 5/26, F16H 57/04

(54) **POLE PIECE DEVICE FOR MAGNETIC GEAR, MAGNETIC GEAR, AND PRODUCTION METHOD FOR POLE PIECE DEVICE FOR MAGNETIC GEAR**
POLSTÜCK FÜR EIN MAGNETGETRIEBE, MAGNETGETRIEBE UND HERSTELLUNGSVERFAHREN FÜR EIN POLSTÜCK FÜR EIN MAGNETISCHES GETRIEBE
DISPOSITIF DE PIÈCE POLAIRE POUR ENGRENAGE MAGNÉTIQUE, ENGRENAGE MAGNÉTIQUE ET PROCÉDÉ DE PRODUCTION DE DISPOSITIF DE PIÈCE POLAIRE POUR ENGRENAGE MAGNÉTIQUE

(30) Priority: 24.01.2020 JP 2020009910
(43) Date of publication of application: 26.10.2022
(73) Proprietor: Mitsubishi Heavy Industries, Ltd., Tokyo 100-8332 (JP)
(72) Inventor: OKABE, Ryoji, Tokyo 100-8332 (JP); SHIMIZU, Takayuki, Tokyo 100-8332 (JP); SAKAI, Masayuki, Tokyo 100-8332 (JP); KAMIYA, Masami, Tokyo 100-8332 (JP)
(74) Representative: Studio Torta S.p.A.
(86) International application number: PCT/JP2021/002065
(87) International publication number: WO 2021/149772

(56) References cited:
- EP-A1- 2 240 998
- EP-A1- 2 485 368
- EP-A2- 2 133 982
- DE-A1- 102015 220 124
- JP-A- 2012 107 719
- JP-A- 2015 091 202
- US-A1- 2003 222 514
- US-A1- 2011 012 458
- US-B2- 9 397 543

## Description

### TECHNICAL FIELD

The present disclosure relates to a magnetic pole piece device for a magnetic gear, a magnetic gear, and a method of producing a magnetic pole piece device for a magnetic gear.

### BACKGROUND

As one type of gear device, there is a magnetic gear which utilizes an attractive force and a repulsive force of a magnet to transmit torque or motion in a non-contact manner, thereby being able to avoid a problem such as wear, vibration, or noise caused by tooth contact. A flux-modulated type (harmonic type) magnetic gear of the magnetic gear includes an inner circumferential side magnet field and an outer circumferential side magnet field concentrically (coaxially) disposed, and a magnetic pole piece device which has a plurality of magnetic pole pieces (pole pieces) and a plurality of non-magnetic bodies each being disposed with a gap (air gap) between these two magnet fields and alternately arranged in the circumferential direction (see Patent Document 1). Then, magnetic fluxes of magnets of the above-described two magnet fields are modulated by the above-described respective magnetic pole pieces to generate harmonic magnetic fluxes, and the above-described two magnet fields are synchronized with the harmonic magnetic fluxes, respectively, thereby operating the flux-modulated type magnetic gear.

For example, in a magnetic geared motor in which the flux-modulated type magnetic gear and a motor are integrated, the above-described outer circumferential side magnet field is fixed to function as a stator, as well as the above-described inner circumferential side magnet field functions as a high-speed rotor and the above-described magnetic pole piece device functions as a low-speed rotor. Then, by rotating the high-speed rotor by a magnetomotive force of a coil, the low-speed rotor rotates according to the reduction ratio. As the magnetic geared motor, for example, a type in which a permanent magnet is installed in a high-speed rotor and a stator, or a type in which a permanent magnet is installed only in a high-speed rotor is known.

### Citation List

### Patent Literature

Patent Document 1: US9219395B
Patent Document 2: EP 2 240 998 A1
Patent Document 3: US 9 397 543
Patent Document 4: DE 10 2015 22012
Patent Document 5: EP 2 485 368

### SUMMARY

### Problems to be Solved

In Patent Document 1, in the magnetic pole piece device, a rod-like reinforcing member extending along the axial direction is provided for each of the magnetic pole pieces arranged along the circumferential direction to strengthen the rigidity. However, such a reinforcing member, extending in the axial direction, is unlikely to contribute to the rigidity against load acting along the radial direction such as centrifugal load and electromagnetic force acting between the magnet fields. If the magnetic pole piece device does not have sufficient rigidity in total including not only the axial load but also the radial load, the device may be deformed in the radial direction and interfere with the adjacent magnet field.

At least one embodiment of the present disclosure was made in view of the above problem, and an object thereof is to provide a magnetic pole piece device for a magnetic gear, a magnetic gear, and a method of producing a magnetic pole piece device for a magnetic gear with excellent rigidity. Solution to the Problems

The object of the invention is solved by a magnetic pole piece device according to claim 1 and a method of producing a magnetic pole piece device for a magnetic gear according to claim 18. Preferred embodiments are disclosed in the dependent claims. To solve the above problem, a magnetic pole piece device for a magnetic gear according to at least one embodiment of the present disclosure is provided with: an outer circumferential cover member and an inner circumferential cover member coaxially disposed on an outer side and an inner side in a radial direction of a magnetic gear, respectively, and each having a cylindrical shape; a magnetic pole piece holder formed by partitioning a cylindrical space formed between an inner circumferential surface of the outer circumferential cover member and an outer circumferential surface of the inner circumferential cover member by wall members extending along the radial direction; and a magnetic pole piece held by the magnetic pole piece holder. The inner ring member, the outer ring member, and the wall members are integrally configured.

To solve the above problem, a magnetic gear according to at least one embodiment of the present disclosure is provided with: the magnetic pole piece device according to at least one embodiment of the present disclosure; an inner diameter side magnet field disposed on an inner circumferential side of the magnetic pole piece device; and an outer diameter side magnet field disposed on an outer circumferential side of the magnetic pole piece device.

To solve the above problem, a method of producing a magnetic pole piece device for a magnetic gear according to at least one embodiment of the present disclosure includes, for producing a magnetic pole piece device including: an outer circumferential cover member and an inner circumferential cover member coaxially disposed on an outer side and an inner side in a radial direction of a magnetic gear, respectively, and each having a cylindrical shape; a magnetic pole piece holder formed by partitioning a cylindrical space formed between an inner circumferential surface of the outer circumferential cover member and an outer circumferential surface of the inner circumferential cover member by wall members extending along the radial direction; and a magnetic pole piece held by the magnetic pole piece holder, in which the inner ring member, the outer ring member, and the wall members are integrally configured, a step of forming one of the outer circumferential cover member or the inner circumferential cover member integrally with the wall members to produce a first intermediate molded product, a step of inserting the magnetic pole piece into a recess formed between the adjacent wall members of the first intermediate molded product to produce a second intermediate molded product, and a step of mounting the other of the outer circumferential cover member or the inner circumferential cover member on the second intermediate molded product to be integrally formed.

### Advantageous Effects

At least one embodiment of the present disclosure provides a magnetic pole piece device for a magnetic gear, a magnetic gear, and a method of producing a magnetic pole piece device for a magnetic gear with excellent rigidity.

### BRIEF DESCRIPTION OF DRAWINGS

FIG. 1 is a cross-sectional view of a magnetic gear along the radial direction according to an embodiment of the present invention.
FIG. 2 is a partially enlarged view of the magnetic gear shown in FIG. 1.
FIG. 3 is a cross-sectional view of the magnetic gear along the axial direction according to an embodiment of the present invention.
FIG. 4A is a schematic cross-sectional view of the magnetic pole piece device along the radial direction according to an embodiment of the present disclosure.
FIG. 4B is a diagram showing the thermal conductivity and tensile modulus of PAN-based CFRP and pitch-based CFRP in comparison with metal.
FIG. 5 is a schematic diagram of a cross-section of line L-L in FIG. 4A along the axial direction.
FIG. 6 is an enlarged and simplified schematic cross-sectional view of the vicinity of the outer circumferential cover member and the inner circumferential cover member of FIG. 5.
FIG. 7 is a first modified example of FIG. 5.
FIG. 8 is an enlarged view of the range M of FIG. 7.
FIG. 9 is a second modified example of FIG. 5.
FIG. 10 is a schematic diagram of a cross-section of line N-N in FIG. 9 along the axial direction.
FIG. 11 is a flowchart schematically showing a method of producing a magnetic pole piece device according to an embodiment of the present disclosure.
FIG. 12 is a flowchart showing an embodiment of the production method of FIG. 11.
FIG. 13A is a schematic diagram showing a production process of the magnetic pole piece device in each step of FIG. 12.
FIG. 13B is a schematic diagram showing a production process of the magnetic pole piece device in each step of FIG. 12.
FIG. 13C is a schematic diagram showing a production process of the magnetic pole piece device in each step of FIG. 12.
FIG. 14 is a flowchart showing another embodiment of the production method of FIG. 11.
FIG. 15A is a schematic diagram showing a production process of the magnetic pole piece device in each step of FIG. 14.
FIG. 15B is a schematic diagram showing a production process of the magnetic pole piece device in each step of FIG. 14.
FIG. 15C is a schematic diagram showing a production process of the magnetic pole piece device in each step of FIG. 14.
FIG. 16A is an example of a perspective diagram showing a configuration example of the core material.
FIG. 16B is another example of a perspective diagram showing a configuration example of the core material.
FIG. 16C is another example of a perspective diagram showing a configuration example of the core material.
FIG. 17A is a modified example of FIG. 16A.
FIG. 17B is another modified example of FIG. 16A.
FIG. 18 is a perspective diagram showing a configuration example of a magnetic pole piece held by a magnetic pole piece holder.
FIG. 19 is a schematic diagram showing a configuration of connection between the solid member and the magnetic pole piece holder in the magnetic pole piece device.
FIG. 20A is a schematic diagram showing one mounting example of the solid member shown in FIG. 19 on the outer cover member or the inner cover member.
FIG. 20B is a schematic diagram showing another mounting example of the solid member shown in FIG. 19 on the outer cover member or the inner cover member.
FIG. 21 is a schematic diagram showing another mounting example of the solid member.
FIG. 22A is an example of a vertical cross-sectional view of the connecting structure including the solid member and the rotor end plate along the axial direction.
FIG. 22B is a plan view of the connecting structure of FIG. 22A viewed from the radially outer side.
FIG. 23A is another example of a vertical cross-sectional view of the connecting structure including the solid member and the rotor end plate along the axial direction.
FIG. 23B is a plan view of the connecting structure of FIG. 23A viewed from the radially outer side.
FIG. 24A is another example of a vertical cross-sectional view of the connecting structure including the solid member and the rotor end plate along the axial direction.
FIG. 24B is a plan view of the connecting structure of FIG. 24A viewed from the radially outer side.
FIG. 25 is a perspective diagram showing another configuration example of the core material.
FIG. 26 is a schematic diagram showing the production process of the core material shown in FIG. 25.
FIG. 27 is an example of a cross-sectional view of the core material perpendicular to the axial direction.
FIG. 28 is a modified example of FIG. 27.
FIG. 29 is another modified example of FIG. 27.
FIG. 30 is another modified example of FIG. 27.
FIG. 31A is a modified example of FIG. 6.
FIG. 31B is another modified example of FIG. 6.
FIG. 31C is another modified example of FIG. 6.
FIG. 31D is another modified example of FIG. 6.

### DETAILED DESCRIPTION

Embodiments of the present invention will now be described in detail with reference to the accompanying drawings. It is intended, however, that unless particularly identified, dimensions, materials, shapes, relative positions, and the like of components described in the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

### (Configuration of magnetic gear 9)

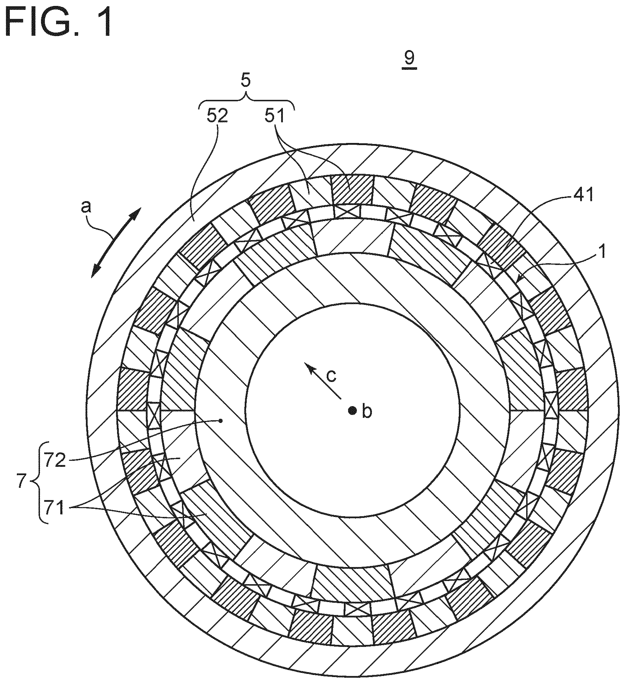

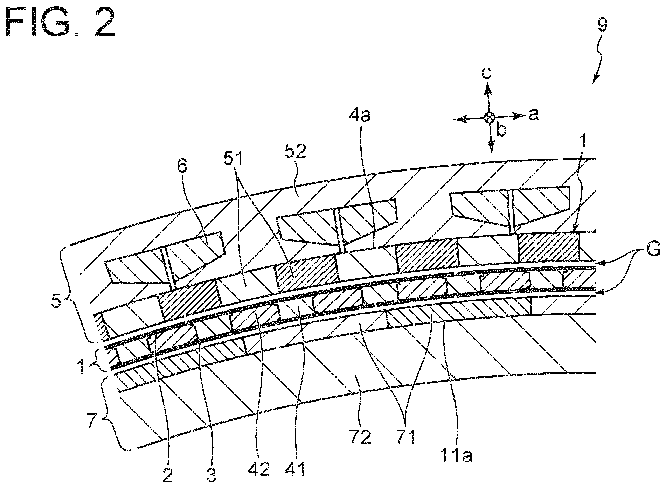

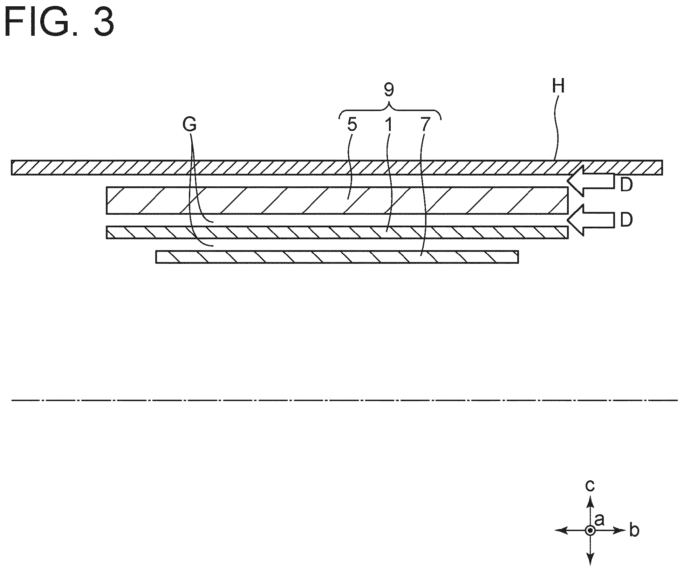

FIG. 1 is a schematic view showing a cross-section of a magnetic gear 9 along the radial direction c according to an embodiment of the present invention. FIG. 2 is a partially enlarged view of the cross-section of the magnetic gear 9 shown in FIG. 1. FIG. 3 is a schematic view showing a cross-section of the magnetic gear 9 along the axial direction b according to an embodiment of the present invention.

The magnetic gear 9 is a device having a mechanism for transmitting torque in a non-contact manner by utilizing an attractive force and a repulsive force of a magnet. The magnetic gear 9 shown in FIGs. 1 to 3 is of a flux-modulated type (harmonic type), and as illustrated, has a structure where an outer diameter side magnet field 5 (outer rotor) having a cylindrical shape (annular; the same applies hereinafter) as a whole, an inner diameter side magnet field 7 (inner rotor) having a cylindrical or columnar shape as a whole, and a magnetic pole piece device 1 (center rotor) having a cylindrical shape as a whole are coaxially disposed with gaps G (air gaps) of a certain distance in the radial direction c (radial direction) from each other. That is, the outer diameter side magnet field 5 is disposed on the radially outer side (outer diameter side) relative to the inner diameter side magnet field 7. Further, the magnetic pole piece device 1 is disposed between the outer diameter side magnet field 5 and the inner diameter side magnet field 7. Then, the outer diameter side magnet field 5, the inner diameter side magnet field 7, and the magnetic pole piece device 1 are disposed concentrically.

Further, as shown in FIG. 2, the outer diameter side magnet field 5 and the inner diameter side magnet field 7 each include magnetic pole pairs (51, 71), such as permanent magnets, which are composed of a plurality of N poles and S poles disposed at intervals (regular intervals) on the circumference in a cross-section of the magnetic gear 9 cut along the radial direction c (hereinafter, the radial cross-section). More specifically, the outer diameter side magnet field 5 includes a plurality of magnetic pole pairs 51 and a support member 52 for supporting the plurality of magnetic pole pairs 51. Then, on the cylindrical inner circumferential surface of the outer diameter side magnet field 5, the plurality of magnetic pole pairs 51 are installed over the whole circumference, with the magnetic poles oriented in the radial direction c, such that the N poles and the S poles are alternated along the circumferential direction. Likewise, the inner diameter side magnet field 7 includes a plurality of inner diameter magnetic pole pairs 71 and a columnar inner diameter support member 72 for supporting the plurality of inner diameter magnetic pole pairs 71. Then, on the cylindrical outer circumferential surface of the inner diameter side magnet field 7, the plurality of inner diameter magnetic pole pairs 71 are installed over the whole circumference along the circumferential direction a, in the same manner as above.

The magnetic pole piece device 1 includes a plurality of magnetic pole pieces 41 (pole pieces) disposed at intervals (regular intervals) from each other over the whole circumference in the circumferential direction a, as described in detail later. Then, for example, when the inner diameter side magnet field 7 is rotated, the magnetic flux of the inner diameter side magnet field 7 is modulated by the magnetic pole pieces 41 of the magnetic pole piece device 1, and rotational torque is generated in the magnetic pole piece device 1 by the action of the modulated magnetic field and the outer diameter side magnet field 5.

In the embodiments shown in FIGs. 1 to 3, the magnetic gear 9 (flux-modulated type magnetic gear) is integrated with a motor to form a magnetic geared motor. More specifically, in the magnetic geared motor, the outer diameter side magnet field 5 is a stator with a plurality of coils 6 (see FIG. 2), and by rotating the inner diameter side magnet field 7 (high-speed rotor) with the electromotive force of the coils 6, the magnetic pole piece device 1 (low-speed rotor) rotates according to the reduction ratio which is determined by the ratio of the number of pole pairs of the magnetic pole pairs 51 of the outer diameter side magnet field 5 to the number of pole pairs of the inner diameter magnetic pole pairs 71 of the inner diameter side magnet field 7.

Further, the magnetic geared motor is supplied with a cooling medium D, such as air or water, in order to protect the above-described constituent elements from heat generated during operation. More specifically, as shown in FIG. 3, the cylindrical gaps G are formed between the inner diameter side magnet field 7 and the magnetic pole piece device 1 and between the outer diameter side magnet field 5 and the magnetic pole piece device 1, respectively, and the cooling medium D is supplied to each of these cylindrical gaps G so as to flow from one end side toward another end side. Further, the cooling medium D is similarly supplied to a gap formed between the outer diameter side magnet field 5 and a housing H disposed on the outer peripheral side thereof.

To the gap between the outer diameter side magnet field 5 and the housing **H,** a gas such as air may be supplied, or, for example, cooling water may be circulated through a water cooling tube installed in the gap.

In the magnetic gear 9 (flux-modulated type magnetic gear) having the above configuration, the above-described magnetic pole piece device 1 receives a load acting along the radial direction such as centrifugal load and electromagnetic force acting between the above-described two magnet fields (5, 7) adjacent to each other on the inner circumferential side and the outer circumferential side. Thus, insufficient rigidity may cause deformation in the radial direction c and interference with the magnetic pole pairs (51, 71) of the above-described magnet fields adjacent in the radial direction c. For this reason, the magnetic pole piece device 1 is configured as follows.

Although the case where the magnetic gear 9 is a magnetic geared motor is described as an example, the magnetic gear 9 can also operate as a magnetic geared generator. In this case, the magnetic pole piece device 1 (center rotor) rotates with the rotation of the inner diameter side magnet field 7 (inner rotor). The operation of the magnetic pole piece device 1 differs depending on whether it is a magnetic geared motor or a magnetic geared generator, but the structure of the device is the same.

### (Configuration of magnetic pole piece device 1)

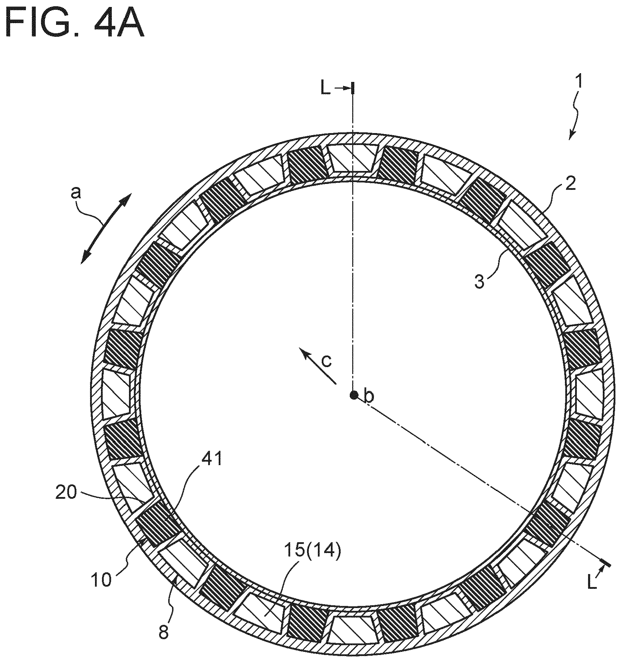

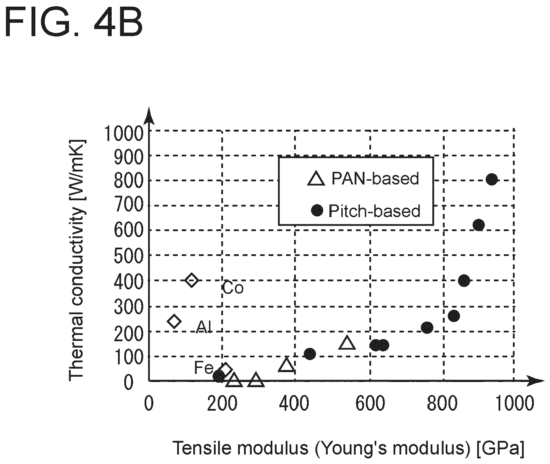

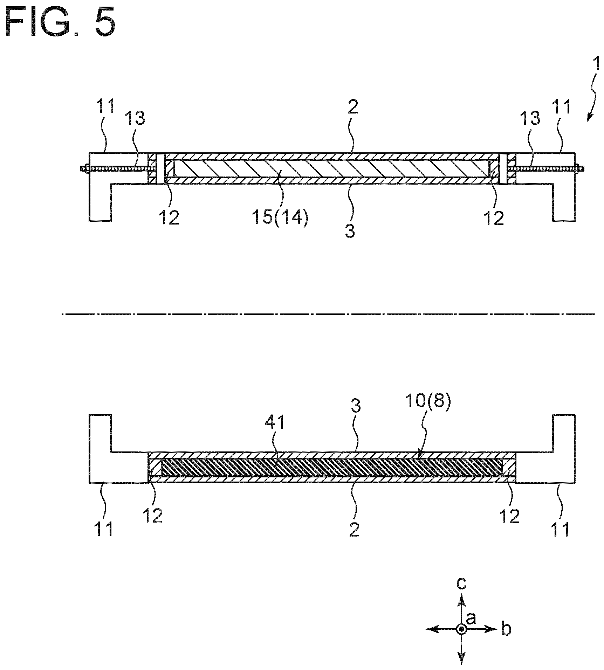

Hereinafter, the magnetic pole piece device 1 will be described in detail. FIG. 4A is a schematic cross-sectional view of the magnetic pole piece device 1 along the radial direction c according to an embodiment of the present disclosure. FIG. 4B is a diagram showing the thermal conductivity and tensile modulus of PAN-based CFRP and pitch-based CFRP in comparison with metal (copper, aluminum, iron). FIG. 5 is a schematic diagram of a cross-section of line L-L in FIG. 4A along the axial direction b.

As described above, the magnetic pole piece device 1 is, for example, a device (member) constituting the magnetic gear 9 which serves as the flux-modulated type magnetic gear or the like constituting the magnetic geared motor, and is a device (member) disposed between the inner diameter side magnet field 7 (the high-speed rotor in the magnetic geared motor) and the outer diameter side magnet field 5 (the stator in the magnetic geared motor) in the magnetic gear 9.

The magnetic pole piece device 1 includes an outer circumferential cover member 2 disposed opposite to the inner circumferential surface of the outer diameter side magnet field 5, and an inner circumferential cover member 3 disposed opposite to the outer circumferential surface of the inner diameter side magnet field 7. The outer circumferential cover member 2 and the inner circumferential cover member 3 are members each having a cylindrical shape as a whole. The inner circumferential cover member 3 has a smaller diameter than the outer circumferential cover member 2 and is disposed coaxially on the inner side of the outer circumferential cover member 2.

A cylindrical space 8 is formed over the entire circumference between the inner circumferential surface of the outer circumferential cover member 2 and the outer circumferential surface of the inner circumferential cover member 3 (in other words, the outer circumferential cover member 2 and the inner circumferential cover member 3 are disposed so as to sandwich the cylindrical space 8). The cylindrical space 8 is partitioned by wall members 20 extending along the radial direction c to form a plurality of magnetic pole piece holders 10. The magnetic pole piece holders 10 are arranged at predetermined intervals (for example, regular intervals) along the circumferential direction. The long magnetic pole piece 41 (pole piece) is inserted into each of the magnetic pole piece holders 10 so that the longitudinal direction of the pole piece is along the axial direction b.

The wall members 20 constituting the magnetic pole piece holders 10 are integrally formed with the outer circumferential cover member 2 and the inner circumferential cover member 3. By connecting the outer circumferential cover member 2 and the inner circumferential cover member 3 to each other by the wall members 20 extending in the radial direction c in this way, the rigidity of the magnetic pole piece device 1 can be effectively improved. For example, when the magnetic gear 9 transmits power, it is possible to effectively improve the rigidity against deflection and torsional deformation caused in the magnetic pole piece device 1 due to a load along the radial direction such as electromagnetic force or centrifugal force received from the outer diameter side magnet field 5 or the inner diameter side magnet field 7. As a result, when the magnetic gear 9 transmits power, it is possible to effectively avoid the risk of contact with the outer diameter side magnet field 5 or the inner diameter side magnet field 7 arranged with the gaps G due to deformation of the magnetic pole piece device 1.

The outer circumferential cover member 2, the inner circumferential cover member 3, and the wall members 20 integrally configured may be integrally formed of, for example, carbon fiber reinforced plastic (CFRP). Carbon fiber reinforced plastic is a lightweight material with excellent strength and reliability. The use of this material provides excellent rigidity while reducing the increase in weight of the magnetic pole piece device 1.

In the case where the outer circumferential cover member 2, the inner circumferential cover member 3, and the wall members 20 are made of carbon fiber reinforced plastic, pitch-based CFRP and PAN-based CFRP may be used in combination depending on the intended use. For example, the wall members 20 may include pitch-based CFRP. Since pitch-based CFRP has more excellent thermal conductivity than PAN-based CFRP, when the wall members 20 adjacent to the magnetic pole pieces 41, which generate heat during operation, are composed of pitch-based CFRP with fibers oriented in the radial direction, the heat dissipation function of the magnetic pole pieces 41 can be effectively improved.

Further, when the outer circumferential cover member 2 and the inner circumferential cover member 3 also include pitch-based CFRP, heat generated from the magnetic pole pieces 41 can be transferred to the inner and outer circumferential cover members (2, 3) via the wall members 20, and efficient heat dissipation and cooling can be performed through the air gaps G provided on the inner and outer circumferences of the magnetic pole piece device 1. In the outer circumferential cover member 2 and the inner circumferential cover member 3, the fibers may be oriented in the circumferential direction to efficiently improve the rigidity of the magnetic pole piece device 1 against electromagnetic force and centrifugal force acting on the magnetic pole pieces 41. Further, the fiber orientation of the outer circumferential cover member 2 and the inner circumferential cover member 3 may be a combination of the circumferential direction and a direction intersecting the circumferential direction, such as ±45° with respect to the axial direction. By orienting the fibers in a direction intersecting the circumferential direction, such as ±45° with respect to the axial direction, the torsional rigidity of the magnetic pole piece device 1 can be efficiently improved. Thus, since pitch-based CFRP has a higher elasticity than PAN-based CFRP, it can efficiently suppress deflection and torsional deformation of the magnetic pole piece device 1 itself due to centrifugal load acting on the magnetic pole pieces 41 and torque load acting on the magnetic pole piece device 1.

The carbon fiber of CFRP used for the outer circumferential cover member 2, the inner circumferential cover member 3, and the wall members 20 preferably has an elastic modulus of 400 GPa, preferably 700 GPa or more. Generally, the higher the elastic modulus of carbon fiber, the higher the thermal conductivity. Carbon fiber with an elastic modulus of 400 GPa has twice the thermal conductivity of iron, and carbon fiber with an elastic modulus of 700 GPa or more has four times the thermal conductivity of iron, which is equivalent to aluminum. Thus, by using carbon fiber with elastic modulus in the above range, it is possible to highly achieve both the cooling property of the magnetic pole piece device 1 and the high rigidity. On the other hand, as shown in FIG. 4B, PAN-based CFRP has higher strength than pitch-based CFRP. Therefore, PAN-based CFRP may be used for each member of the magnetic pole piece device 1 according to the strength required for the magnetic pole piece device 1.

As shown in FIG. 5, a rotor end plate 11 for outputting the power transmitted to the magnetic pole piece device 1 is fixed to the end portion of the magnetic pole piece device 1 in the axial direction b. A solid member 12 is provided near the end of the cylindrical space 8 in the axial direction b. The solid member 12 is made of an insulating material such as the aforementioned carbon fiber reinforced plastic or glass fiber reinforced plastic (GFRP), and is configured to fill a space surrounded by the inner circumferential surface of the outer circumferential cover member 2, the outer circumferential surface of the inner circumferential cover member 3, and the end surface of the rotor end plate 11 (in other words, the solid member 12 is configured to be in contact with the inner circumferential surface of the outer circumferential cover member 2, the outer circumferential surface of the inner circumferential cover member 3, and the end surface of the rotor end plate 11).

A connecting member 13 is embedded in the solid member 12. The connecting member 13 is, for example, a T-shaped bolt that has three threaded ends to be fastened to the outer circumferential cover member 2, the inner circumferential cover member 3, and the rotor end plate 11 to connect the three to each other. Thereby, the magnetic pole pieces 41 held by the magnetic pole piece holders 10 are firmly fixed, and good rigidity is obtained with a stable structure.

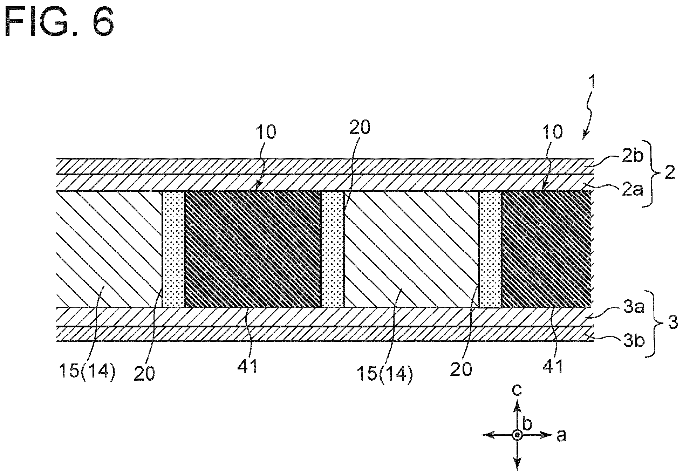

As described above, the magnetic pole piece holders 10 are arranged at predetermined intervals along the circumferential direction a in the cylindrical space 8. Between each adjacent magnetic pole piece holders 10 in the cylindrical space 8, an interjacent space 14 defined by a pair of wall members 20 is formed. In the embodiments shown in FIGs. 5 and 6, the interjacent space 14 is filled with a core material 15 placed therein. The core material 15 is configured to include a lightweight non-magnetic material, for example, a polymer hard foam such as urethane, polyetherimide, polyimide, or polymethacrylicimide, or a honeycomb structure composed of a polymer material alone or a composite of a polymer material and pulp fiber, aramid fiber, glass fiber, carbon fiber, or the like. By filling the interjacent space 14 with the core material 15, the rigidity of the magnetic pole piece device 1 can be improved more effectively even when the outer circumferential cover member 2 and the inner circumferential cover member 3 constituting the magnetic pole piece device 1 are thinned.

Each of the outer circumferential cover member 2 and the inner circumferential cover member 3 formed integrally with the wall members 20 may be made of carbon fiber reinforced plastic having a plurality of layers with different fiber directions from each other. FIG. 6 is an enlarged and simplified schematic cross-sectional view of the vicinity of the outer circumferential cover member 2 and the inner circumferential cover member 3 of FIG. 5.

In the example shown in FIG. 6, the outer circumferential cover member 2 includes a first layer 2a whose fiber direction is a first direction and a second layer 2b whose fiber direction is a second direction. The inner circumferential cover member 3 includes a first layer 3a whose fiber direction is a first direction and a second layer 3b whose fiber direction is a second direction. The first direction is a direction parallel to the circumferential direction a, and the second direction is a direction intersecting the circumferential direction a in the plane composed of the circumferential direction a and the axial direction b, for example, a direction ±45 degrees with respect to the axial direction b. The wall member 20 is made of carbon fiber reinforced plastic whose fiber direction is a third direction or a fourth direction. The third direction is a direction parallel to the radial direction c, and the fourth direction is a direction intersecting the radial direction in the plane composed of the axial direction b and the radial direction c, for example, a direction ±45 degrees with respect to the axial direction b.

Thus, with the outer circumferential cover member 2 and the inner circumferential cover member 3 having a hybrid structure in which different layers are combined, when the magnetic gear 9 transmits power, it is possible to effectively improve the rigidity against deflection caused in the magnetic pole piece device 1 due to a load received from the outer diameter side magnet field 5 or the inner diameter side magnet field 7 or the rigidity against torsional deformation with respect to torque transmission. In particular, since centrifugal force acts on the magnetic pole piece device 1 along the radial direction c due to rotation, with the provision of the first layer (2a, 3b) whose fiber direction is the first direction along the circumferential direction a, the centrifugal force in the radial direction c can be received as a hoop load by continuous carbon fibers having high rigidity and high strength, and deflection of the magnetic pole piece device 1 due to the centrifugal force can be effectively suppressed. On the other hand, since the magnetic pole piece device 1 needs to transmit torque load from one end plate to the other end plate, with the provision of the second layer (2b, 3b) whose fiber direction is the second direction intersecting the circumferential direction a, the rigidity against torsion can be effectively improved.

In the example of FIG. 6, the first layer 2a of the outer circumferential cover member 2 is arranged on the inner circumferential side of the second layer 2b, but the first layer 2a may be arranged on the outer circumferential side of the second layer 2b. Similarly, the first layer 3a of the inner circumferential cover member 3 is arranged on the outer circumferential side of the second layer 3b, but the first layer 3a may be arranged on the inner circumferential side of the second layer 3b. Further, in the example of FIG. 6, both the outer circumferential cover member 2 and the inner circumferential cover member 3 are composed of a plurality of layers (2a, 2b, 3a, 3b), but only one of the outer circumferential cover member 2 or the inner circumferential cover member 3 may be composed of a plurality of layers.

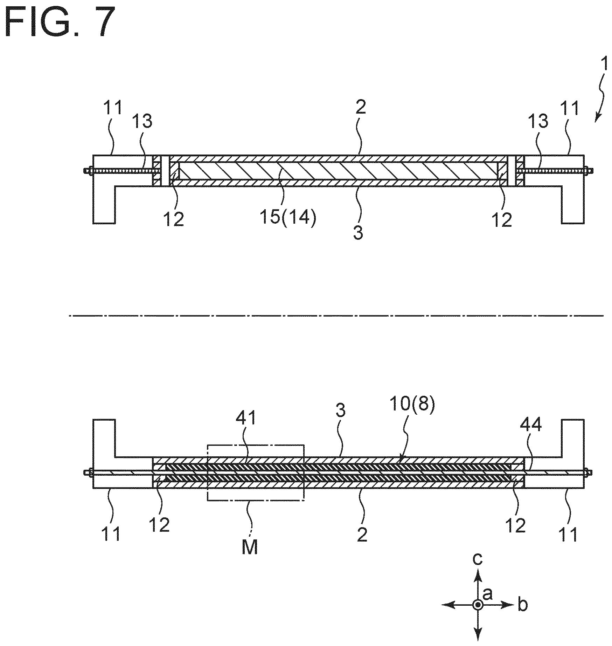

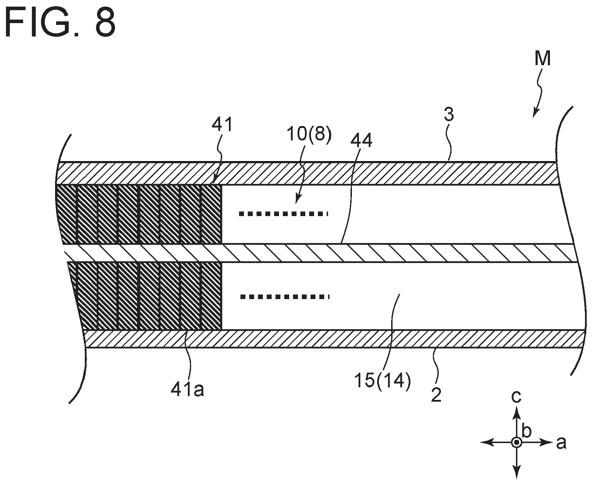

FIG. 7 is a first modified example of FIG. 5. FIG. 8 is an enlarged view of the range M of FIG. 7. In the first modified example, as shown in FIG. 8, the magnetic pole piece 41 held by the magnetic pole piece holder 10 includes a plurality of magnetic pole plate materials 41a laminated along the axial direction b. Each of the magnetic pole plate materials 41a has a hole portion 43 provided at a position corresponding to each other, and a fastening rod 44 extending along the axial direction b is inserted into the hole portion 43. As shown in FIG. 7, the end portion of the fastening rod 44 is fastened to the above-described solid member 12. Thus, the magnetic pole plate materials 41a constituting the magnetic pole piece 41 are fixed by the fastening rod 44 to the rotor end plate 11 together with the outer circumferential cover member 2 and the inner circumferential cover member 3 via the solid member 12. By adopting such a structure, the torsional rigidity of the magnetic pole piece device 1 can be more effectively improved, the shear stress acting on the fastening bolt 13 and the bolt 14 can be effectively reduced, and a larger torque can be transmitted.

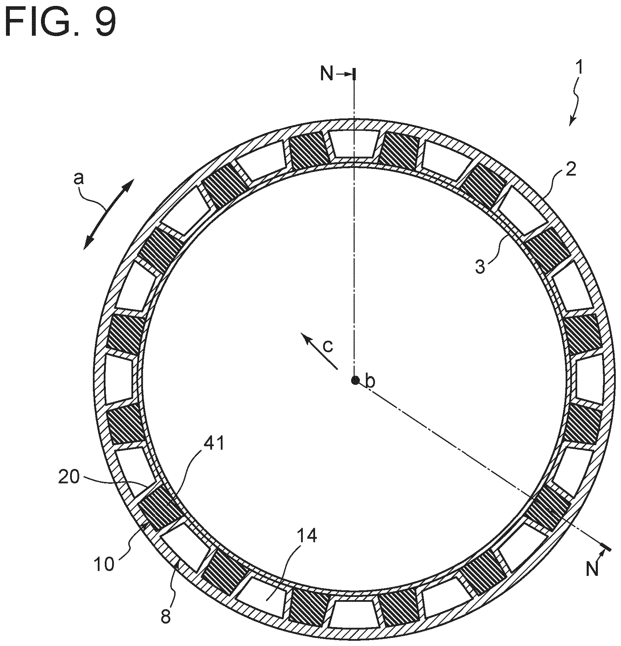

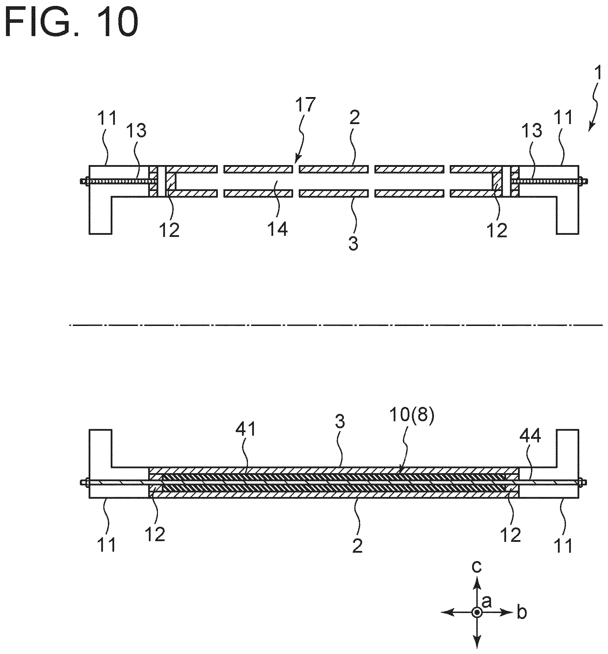

FIG. 9 is a second modified example of FIG. 5. FIG. 10 is a schematic diagram of a cross-section of line N-N in FIG. 9 along the axial direction b. In the second modified example, between each adjacent magnetic pole piece holders 10 in the cylindrical space 8, the interjacent space 14 defined by a pair of wall members 20 is formed as a hollow space (hollow core) (in other words, the interjacent space 14 is not filled with the core material 15 as shown in FIG. 5). Further, the outer circumferential cover member 2 and the inner circumferential cover member 3 surrounding the interjacent space 14 have cooling holes 17 that communicate with the outside.

As shown in FIG. 10, both the outer circumferential cover member 2 and the inner circumferential cover member 3 have the cooling holes 17. Thereby, the cooling medium D (see FIG. 3) flowing through the gaps G receives centrifugal force and is taken into the interjacent space 14 which is the hollow core through the cooling hole 17 in the inner circumferential cover member 3 on the inner side, exchanges heat with a cooling target (for example, the adjacent magnetic pole piece 41) in the interjacent space 14, and is then discharged to the outside (the gap G between the outer circumferential cover member 2 and the housing H) through the cooling hole 17 in the outer circumferential cover member 2. By providing the cooling holes 17 in this way, the flow passage for the cooling medium D passing through the interjacent space 14 is formed, so that a good cooling effect can be obtained.

The cooling hole 17 may be provided in either the outer circumferential cover member 2 or the inner circumferential cover member 3.

### (Production method for magnetic pole piece device 1)

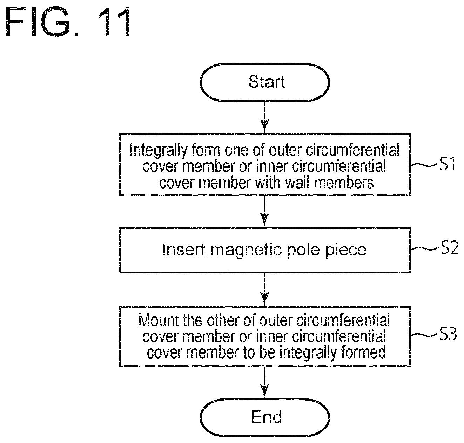

The method of producing the magnetic pole piece device 1 having the above configuration will be described. FIG. 11 is a flowchart schematically showing the method of producing the magnetic pole piece device 1 according to an embodiment of the present disclosure.

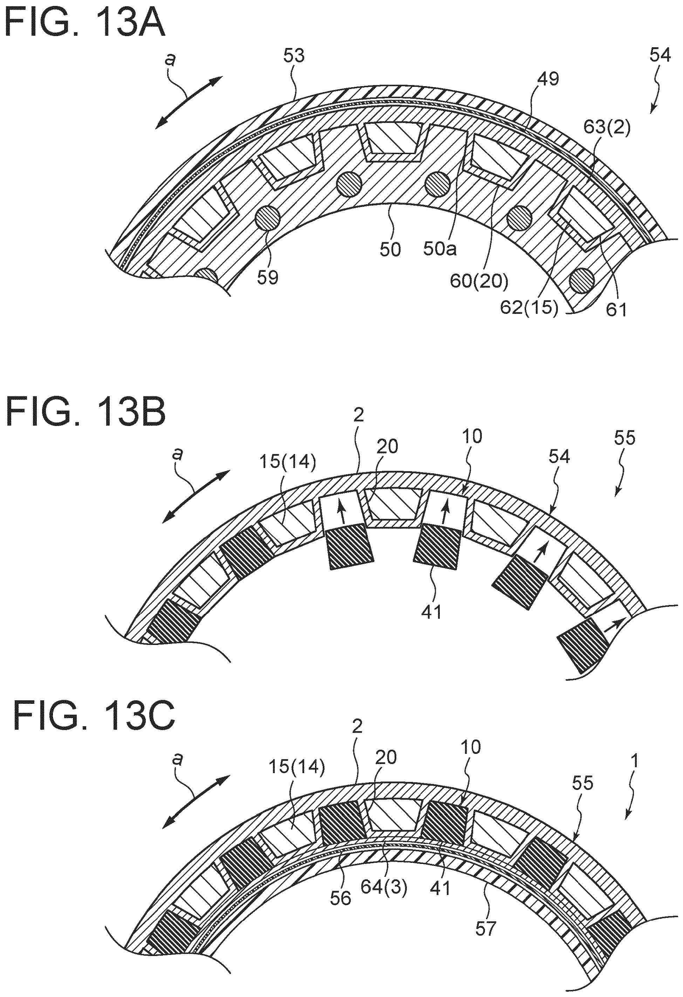

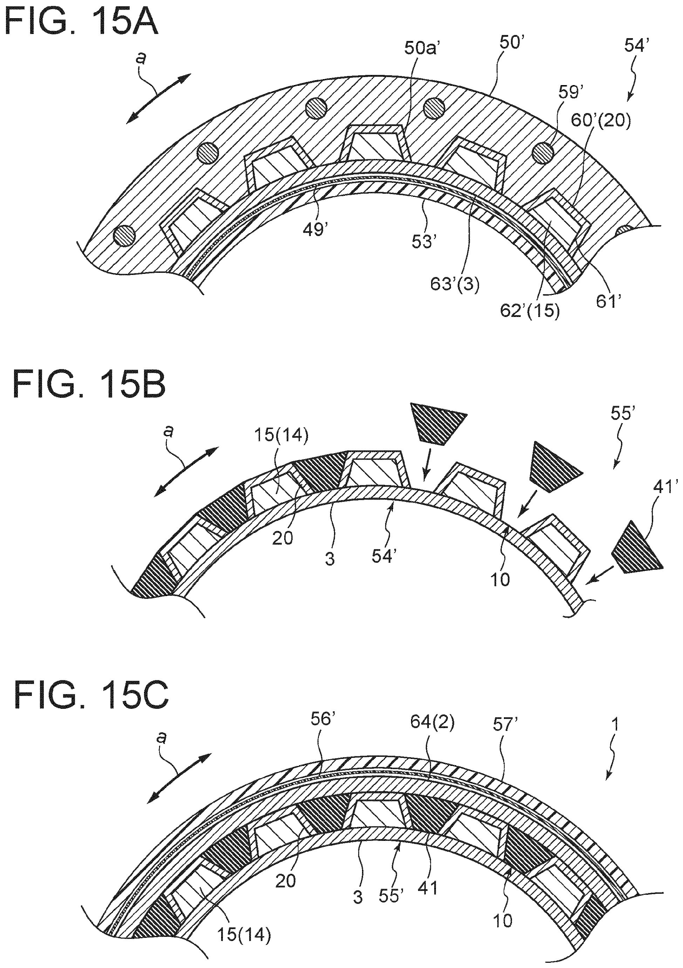

In the production method, first, one of the outer circumferential cover member 2 or the inner circumferential cover member 3 constituting the magnetic pole piece device 1 is formed integrally with the wall members 20 to produce a first intermediate molded product 54, 54' (see FIG. 13 or FIG. 15 described later) (step S1). Then, the magnetic pole pieces 41 are inserted into the first intermediate molded product 54, 54' to produce a second intermediate molded product 55, 55' (step S2). Then, the other of the outer circumferential cover member 2 or the inner circumferential cover member 3 is mounted on the second intermediate molded product 55, 55' so that they are integrally formed to complete the magnetic pole piece device 1 (step S3).

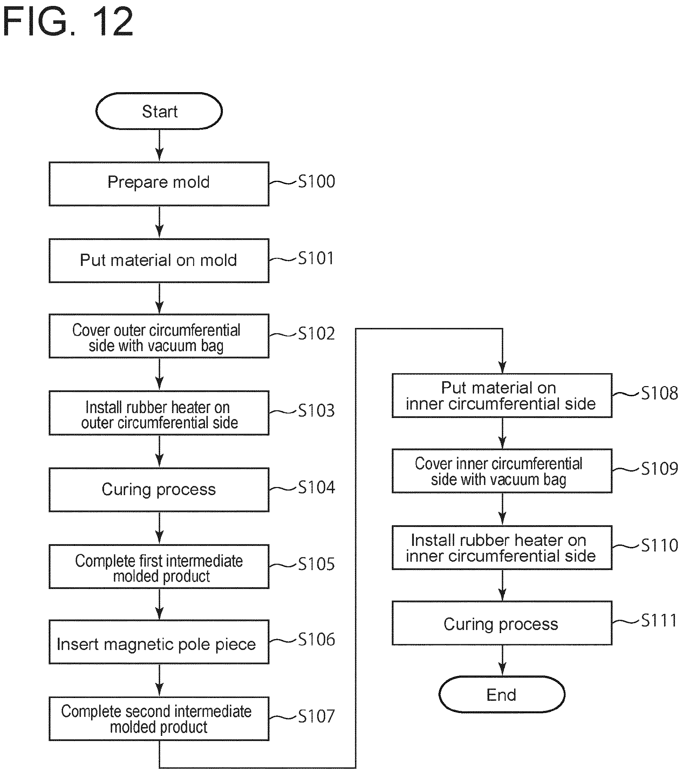

First, the case where the production of the first intermediate molded product 54 in step S1 of FIG. 11 is performed by integrally forming the outer circumferential cover member 2 and the wall members 20 (in other words, the magnetic pole piece device 1 is produced from the outer circumferential side) will be described. FIG. 12 is a flowchart showing an embodiment of the production method of FIG. 11. FIGs. 13A to 13C are each a schematic diagram showing a production process of the magnetic pole piece device 1 in each step of FIG. 12.

First, a mold 50 corresponding to the first intermediate molded product 54 is prepared (step S100). That is, as shown in FIG. 13A, the surface shape of the mold 50 on the radially outer side is configured to match the surface shape of the first intermediate molded product 54 on the radially inner side. More specifically, on the surface of the mold 50 on the radially outer side, a plurality of projections 50a are provided along the circumferential direction a so as to correspond to the surface shape of the first intermediate molded product 54 on the radially inner side, which will be described later.

The mold 50 has a built-in heater 59 that can be operated for heat treatment later. The heater 59 includes, for example, a plurality of heating wires disposed along the radial direction a.

Then, a constituent material of the first intermediate molded product 54 is put on the mold 50 prepared in step S100 (step S101). The constituent material put in step S101 may be, for example, a prepreg material obtained by impregnating a fiber base material such as the aforementioned carbon fiber reinforced plastic with a thermosetting resin. Specifically, a first constituent material 60 corresponding to the wall members 20 is put along the surface of the mold 50 on the radially outer side. Then, a non-magnetic material 62 corresponding to the core materials 15 is inserted into recesses 61 on the surface of the first constituent material 60 on the radially outer side (as shown in FIG. 9, when the interjacent space 14 is not filled with the core material 15 and is configured as the hollow core, a material that can be melted later may be used as the non-magnetic material 62). Then, a second constituent material 63 corresponding to the outer circumferential cover member 2 is put from the radially outer side to the first constituent material 60 into which the non-magnetic material 62 has been inserted.

Subsequently, the radially outer circumferential side of the constituent material put on the mold 50 is covered with a vacuum bag 49 (step S102), and a rubber heater 53 is installed on the radially outer circumferential side of the vacuum bag 49 (step S103). By operating the heater 59 and the rubber heater 53 built in the mold 50 in this state, the constituent material put on the mold 50 is heated and cured (step S104). As a result, the first intermediate molded product 54 in which the outer circumferential cover member 2 and the magnetic pole piece holders 10 are integrally configured (integrally co-cured) is completed (step S105). By integrally forming the wall surfaces of the magnetic pole piece holders 10 and the outer circumferential cover member 2 using the mold 50 in this way, the shape accuracy is improved. This eliminates the need for fine adjustment of the magnetic pole piece holders 10 by additional processing when the magnetic pole pieces 41 are inserted into the magnetic pole piece holders 10.

Then, as shown in FIG. 13B, the magnetic pole pieces 41 are inserted into the recesses, which correspond to the magnetic pole piece holders 10, of the first intermediate molded product 54 taken out from the mold 50 (step S106), and the second intermediate molded product 55 is produced (step S107).

In the case where the same material as the outer circumferential cover member 2 and the wall members 20 is used for the magnetic pole pieces 41, the magnetic pole pieces 41 inserted in step S 106 may be integrally formed together with the outer circumferential cover member 2 and the wall members 20 in steps S101 to S105. That is, the second intermediate molded product 55 may be produced by integrally forming the outer circumferential cover member 2 with the wall members 20 constituting the magnetic pole piece holders 10 and the magnetic pole pieces 41 inserted in the magnetic pole piece holders 10 when the first intermediate molded product 54 is integrally formed. In this case, by integrally forming the magnetic pole pieces 41 in addition to the outer circumferential cover member 2 and the wall members 20, the magnetic pole piece device 1 can be produced more easily.

Then, as shown in FIG. 13C, a constituent material 64 corresponding to the inner circumferential cover member 3 is put on the surface of the second intermediate molded product 55 on the radially inner side (step S108). The constituent material 64 put in step S108 is the same as the constituent material put in step S101, and may be, for example, a prepreg material obtained by impregnating a fiber base material such as the aforementioned carbon fiber reinforced plastic with a thermosetting resin. Then, the radially inner circumferential side of the constituent material put in step S108 is covered with a vacuum bag 56 (step S109), and a rubber heater 57 is installed on the inner circumferential side of the vacuum bag 56 (step S110). By operating the rubber heater 57 installed in step S110 for heating in this state, curing process is performed (step S 111). As a result, the inner circumferential cover member 3 is further formed integrally with the second intermediate molded product 55, and the magnetic pole piece device 1 is completed. In this way, by using the second intermediate molded product 55, which is obtained by inserting the magnetic pole pieces 41 into the first intermediate molded product 54, as a substantially new mold to further integrally form the inner circumferential cover member 3, the shape accuracy of the inner circumferential cover member 3 is improved, and extra processing and bonding steps are eliminated, resulting in improved productivity and reduced cost.

In step S108, co-bond molding may be performed by putting the constituent material 64 corresponding to the inner circumferential cover member 3 with an adhesive interposed between the constituent material 64 and the second intermediate molded product 55.

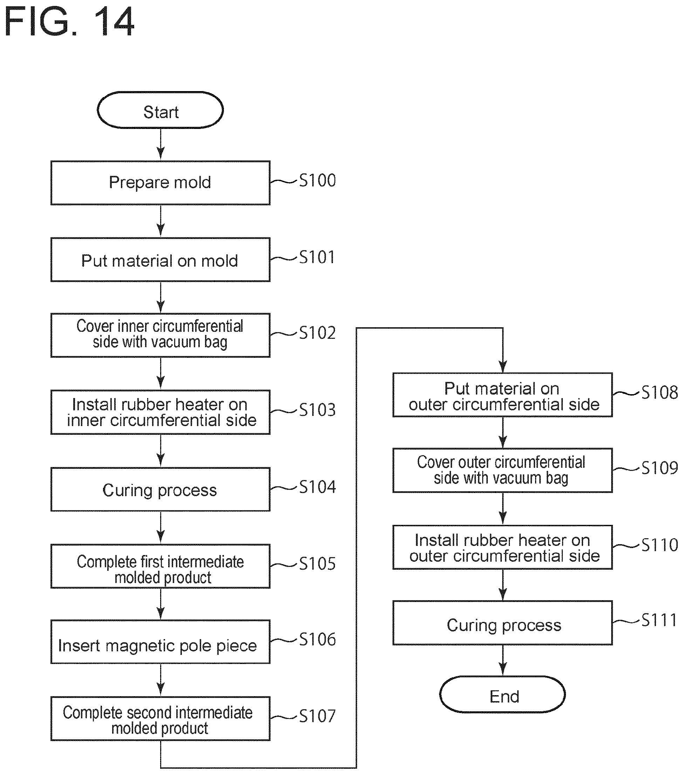

Next, the case where the production of the first intermediate molded product 54 in step S1 of FIG. 11 is performed by integrally forming the inner circumferential cover member 3 and the wall members 20 (in other words, the magnetic pole piece device 1 is produced from the inner circumferential side) will be described. FIG. 14 is a flowchart showing another embodiment of the production method of FIG. 11. FIGs. 15A to 15C are each a schematic diagram showing a production process of the magnetic pole piece device 1 in each step of FIG. 14.

First, a mold 50' corresponding to the first intermediate molded product 54' is prepared (step S200). That is, as shown in FIG. 15A, the surface shape of the mold 50' on the radially inner side is configured to match the surface shape of the first intermediate molded product 54' on the radially outer side. More specifically, on the surface of the mold 50' on the radially inner side, a plurality of projections 50a' are provided along the circumferential direction a so as to correspond to the surface shape of the first intermediate molded product 54' on the radially outer side, which will be described later.

The mold 50' has a built-in heater 59' that can be operated for heat treatment later. The heater 59' includes, for example, a plurality of heating wires disposed along the radial direction a.

Then, a constituent material of the first intermediate molded product 54' is put on the mold 50' prepared in step S200 (step S201). The constituent material put in step S201 may be, for example, a prepreg material obtained by impregnating a fiber base material such as the aforementioned carbon fiber reinforced plastic with a thermosetting resin. Specifically, a first constituent material 60' corresponding to the wall members 20 is put along the surface of the mold 50' on the radially inner side. Then, a non-magnetic material 62' corresponding to the core materials 15 is inserted into recesses 61' on the surface of the first constituent material 60' on the radially outer side (as shown in FIG. 9, when the interjacent space 14 is not filled with the core material 15 and is configured as the hollow core, a material that can be melted later may be used as the non-magnetic material 62'). Then, a second constituent material 63' corresponding to the outer circumferential cover member 2 is put from the radially inner side to the first constituent material 60' into which the non-magnetic material 62' has been inserted.

Subsequently, the radially inner side of the constituent material put on the mold 50' is covered with a vacuum bag 49' (step S202), and a rubber heater 53' is installed on the radially inner side of the vacuum bag 49' (step S203). By operating the heater 59' and the rubber heater 53' built in the mold 50' in this state, the constituent material put on the mold 50' is heated and cured (step S204). As a result, the first intermediate molded product 54' in which the inner circumferential cover member 3 and the magnetic pole piece holders 10 are integrally configured (integrally co-cured) is completed (step S205). By integrally forming the wall surfaces of the magnetic pole piece holders 10 and the inner circumferential cover member 3 using the mold 50' in this way, the shape accuracy is improved. This eliminates the need for fine adjustment of the magnetic pole piece holders 10 by additional processing when the magnetic pole pieces 41 are inserted into the magnetic pole piece holders 10.

Then, as shown in FIG. 15B, the magnetic pole pieces 41 are inserted into the recesses, which correspond to the magnetic pole piece holders 10, of the first intermediate molded product 54' taken out from the mold 50' (step S206), and the second intermediate molded product 55' is produced (step S207).

When the same material as the inner circumferential cover member 3 and the wall members 20 is used for the magnetic pole pieces 41, the magnetic pole pieces 41 inserted in step S206 may be integrally formed together with the inner circumferential cover member 3 and the wall members 20 in steps S201 to S205. That is, the second intermediate molded product 55 may be produced by integrally forming the inner circumferential cover member 3 with the wall members 20 constituting the magnetic pole piece holders 10 and the magnetic pole pieces 41 inserted in the magnetic pole piece holders 10 when the first intermediate molded product 54 is integrally formed. In this case, by integrally forming the magnetic pole pieces 41 in addition to the inner circumferential cover member 3 and the wall members 20, the magnetic pole piece device 1 can be produced more easily.

Then, as shown in FIG. 15C, a constituent material 64' corresponding to the outer circumferential cover member 2 is put on the surface of the second intermediate molded product 55' on the radially inner side (step S208). The constituent material 64' put in step S208 is the same as the constituent material put in step S201, and may be, for example, a prepreg material obtained by impregnating a fiber base material such as the aforementioned carbon fiber reinforced plastic with a thermosetting resin. Then, the radially outer side of the constituent material put in step S208 is covered with a vacuum bag 56' (step S209), and a rubber heater 57' is installed on the outer circumferential side of the vacuum bag 56' (step S210). By operating the rubber heater 57' installed in step S210 for heating in this state, curing process is performed (step S211). As a result, the outer circumferential cover member 2 is further formed integrally with the second intermediate molded product 55', and the magnetic pole piece device 1 is completed. In this way, by using the second intermediate molded product 55', which is obtained by inserting the magnetic pole pieces 41 into the first intermediate molded product 54', as a substantially new mold to further integrally form the outer circumferential cover member 2, the shape accuracy of the outer circumferential cover member 2 is improved, and extra processing and bonding steps are eliminated, resulting in improved productivity and reduced cost.

In step S208, co-bond molding may be performed by putting the constituent material 64' corresponding to the outer circumferential cover member 2 with an adhesive interposed between the constituent material 64' and the second intermediate molded product 55'.

As described above, according to the above-described embodiments, it is possible to provide the magnetic pole piece device 1 for the magnetic gear 9, the magnetic gear 9, and the method of producing the magnetic pole piece device 1 for the magnetic gear 9 with high rigidity.

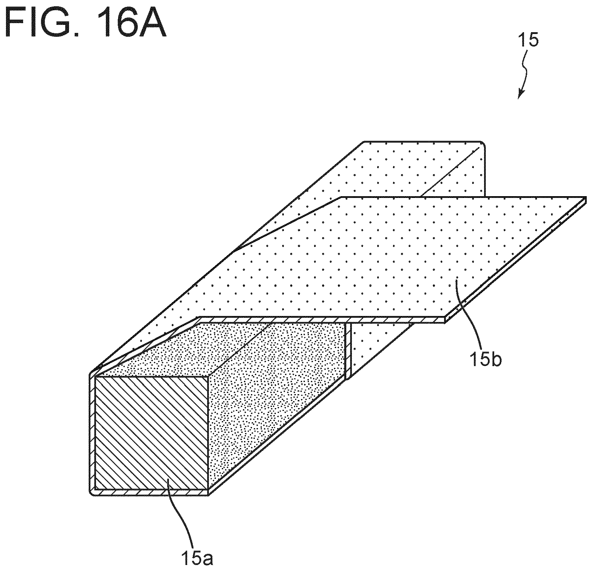

Next, some configuration examples of the core material 15 to be filled in the interjacent space 14 of the magnetic pole piece holder 10 included in the magnetic pole piece device 1 will be described. FIGs. 16A to 16C are each a perspective diagram showing a configuration example of the core material 15.

In FIGs. 16A to 16C, the core material 15 includes a core body 15a and a first cover member 15b at least partially surrounding the core body 15a. The first cover member 15b is disposed so as to at least partially surround the core body 15a extending along the axial direction. In FIGs. 16A to 16C, the first cover member 15b is a single elongated member and is wound around the core body 15a over the entire circumference.

In the embodiment shown in FIG. 16A, the core body 15a is configured as a solid foam core. The foam core may be a lightweight non-magnetic material as described above, for example, a polymer hard foam such as urethane, polyetherimide, polyimide, or polymethacrylicimide, or a honeycomb structure composed of a polymer material alone or a composite of a polymer material and pulp fiber, aramid fiber, glass fiber, carbon fiber, or the like.

The first cover member 15b may be made of, for example, a fiber reinforced resin such as carbon fiber reinforced plastic (CFRP), glass fiber reinforced plastic (GFRP), aramid fiber reinforced plastic (AFRP), basalt fiber reinforced plastic (BFRP), boron fiber reinforced plastic (BFRP), Kevlar fiber reinforced plastic (KFRP), or Vectran fiber reinforced plastic (VFRP).

In the producing process of the core material 15, in the case where the first cover member 15b is made of fiber reinforced plastic, a prepreg material obtained by impregnating a fiber base material with a thermosetting resin is attached to the outer circumferential cover member 2 and the inner circumferential cover member 3 in a state where the prepreg material is arranged around the core member 15a, and is cured at the same time as the outer circumferential cover member 2 and the inner circumferential cover member 3 to integrally form the first cover member 15b with the outer circumferential cover member 2 and the inner circumferential cover member 3. As a result, good structural strength can be obtained, and in particular, weight reduction and workability improvement in manufacturing can be expected while maintaining the axial rigidity and torsional rigidity with respect to torque transmission.

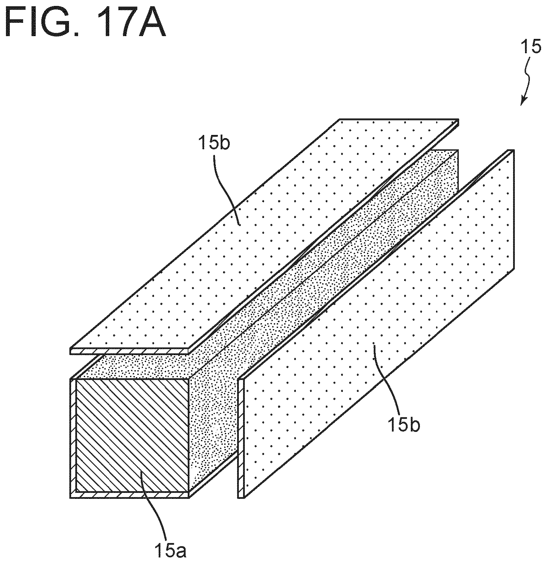

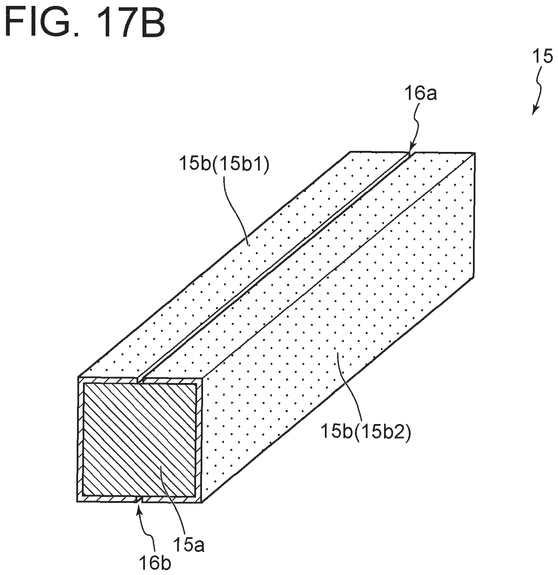

In another embodiment, as shown in FIG. 17A, the first cover member 15b may be configured by attaching divided segments of the first cover member 15b to each face of the core body 15a having a substantially square cross-sectional shape in a cross-section perpendicular to the axial direction. Further, in another embodiment, as shown in FIG. 17B, the first cover member 15b may be configured by splicing two cover members 15b1 and 15b2 having a substantially U-shape in a cross-section perpendicular to the axial direction so as to cover the core body 15a from both sides. In this case, as shown in FIG. 17B, the positions where the cover member 15b1 and the cover member 15b2 are spliced together may be set as an outer splice position 16a on the side of the first cover member 15b facing the outer cover member 2 and an inner splice position 16b on the side facing the inner cover member 3. In this case, the continuity of load transmission from the first cover member 15b to the outer cover member 2 or the inner cover member 3 is not impaired. Further, by avoiding the lapping of the first cover member 15b on the outer cover member 2 side or the inner cover member 3 side, it is expected that the outer cylinder surface roughness after curing can be improved while avoiding the failure of handling.

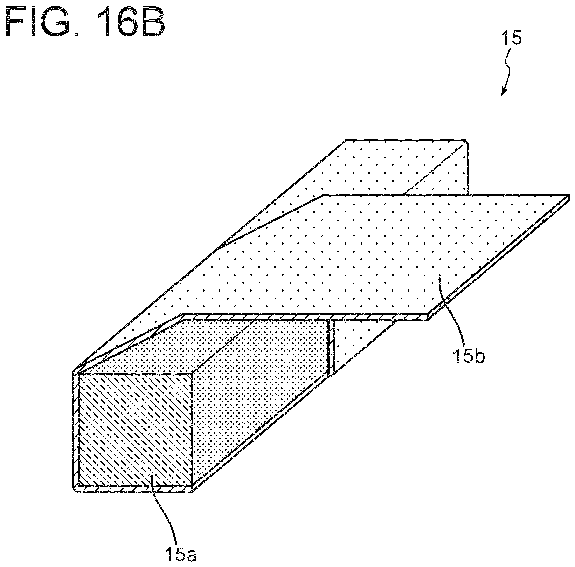

In the embodiment shown in FIG. 16B, the core body 15a is configured as a solid member made of fiber reinforced plastic. Thus, when the core body 15a is made of fiber reinforced plastic, the core body 15a itself can have axial rigidity and torsional rigidity with respect to torque transmission due to the stacking orientation. For the fiber reinforced plastic, for example, fibers such as pitch-based carbon fiber, PAN-based carbon fiber, glass fiber, and polymer fiber may be used, and plastics such as thermosetting resins, e.g., epoxy, polyester, phenol, bismaleimide, and polyurethane, and thermoplastic resins, e.g., thermoplastic polyimide, PP, polyethylene, polyvinyl chloride, polystyrene, polyetherimide, and nylon may be used.

In the embodiment shown in FIG. 16B, the first cover member 15b may be configured as, for example, a resin sheet containing a film adhesive. The core body 15a made of fiber reinforced plastic can be formed from a laminated sheet by machining, for example. By forming the first cover member 15b from a resin sheet, the shape of the machined core body 15a can be suitably adapted to the outer cover member 2 and the inner cover member 3 to achieve an integrated structure having good rigidity.

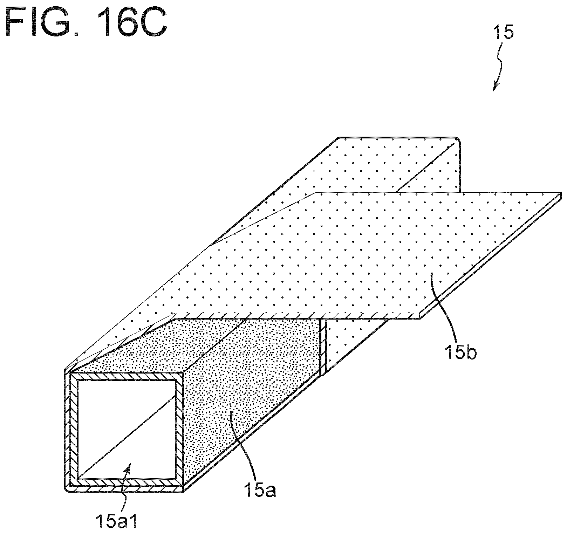

In the embodiment shown in FIG. 16C, the core body 15a is made of fiber reinforced plastic as in the embodiment shown in FIG. 16B, but has a hollow structure with a hollow portion 15a1 that opens inward along the axial direction. The use of the core body 15a having a hollow structure reduces the weight of the magnetic pole piece device. Further, by introducing a cooling medium into the hollow portion 15a1, it is possible to improve the cooling performance of the magnetic pole piece device 1.

Such a hollow portion 15a1 can be easily formed, for example, by placing a fiber reinforced resin prepreg around a core having a shape corresponding to the hollow portion 15a1, curing the prepreg, and then removing the core.

In the present embodiment, the case where the cross-sectional shape of the hollow portion 15a1 is substantially rectangular is illustrated, but the cross-sectional shape of the hollow portion 15a may be any shape such as a circle or a polygon. Further, in the present embodiment, the case where the core body 15a has one hollow portion 15a1 is illustrated, but the core body 15a may have a plurality of hollow portions 15a1.

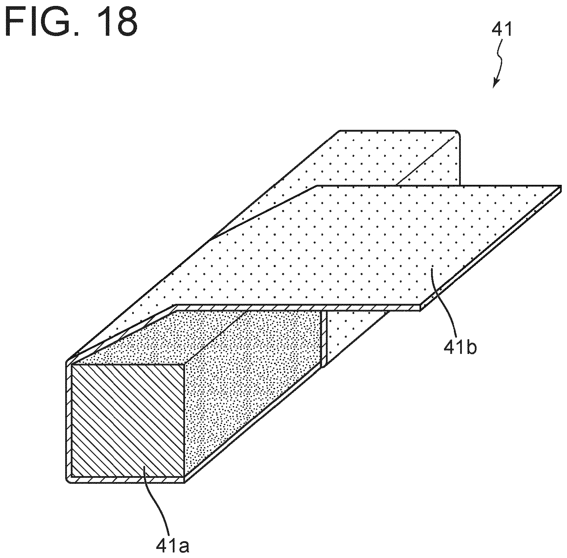

Next, a configuration example of the magnetic pole piece 41 held by the magnetic pole piece holder 10 will be described. FIG. 18 is a perspective diagram showing a configuration example of the magnetic pole piece 41 held by the magnetic pole piece holder 10.

In the embodiment shown in FIG. 18, the magnetic pole piece 41 includes a magnetic pole piece body 41a and a second cover member 41b at least partially surrounding the magnetic pole piece body 41a. In a cross-section perpendicular to the axial direction, the second cover member 41b may be disposed so as to partially surround the magnetic pole piece body 41a, or may be disposed so as to surround the entire circumference of the magnetic pole piece body 41a.

The second cover member 41b may be, for example, a film adhesive such as an epoxy resin or a fiber reinforced resin prepreg such as KFRP, or may be a combination thereof. Thus, since the second cover member 41b is interposed between the h magnetic pole piece body 41 and the outer cover member 2 or the inner cover member 3, the shear strength between the two can be effectively improved.

The second cover member 41b may be configured as an elastic member such as a silicon sheet or a rubber sheet. In this case, vibration generated in the magnetic pole piece device 1 can be effectively reduced by the damping effect of the second cover member 41b. The same effect can be expected when a Kevlar fiber reinforced prepreg having vibration damping characteristics is used as the second cover member 41b.

The second cover member 41b may be configured as a foam sheet. In this case, since the foam sheet has flexibility and can be adjusted in thickness, when the magnetic pole piece 41 is assembled to the outer cover member 2 or the inner cover member 3, a gap created between them due to the dimensional tolerance can be filled, and a possible interference can be absorbed, so that the magnetic pole piece device 1 can be easily assembled. Furthermore, even if a thermal expansion difference occurs between the magnetic pole piece 41 and a surrounding component heated during manufacturing or operation, the difference can be mitigated by the second cover member 41b, so that interface peeling and the like can be effectively prevented.

FIG. 18 shows the case where a single second cover member 41b is wound around the magnetic pole piece body 41a. In this case, by winding the prepreg, which becomes the second cover member 41b, around the magnetic pole piece body 41a and then assembling it to the outer cover member 2 and the inner cover member 3 to integrally cure the assembly, the second cover member 41b can be integrally formed with the outer cover member 2 and the inner cover member 3 with good adhesiveness, so that the rigidity can be improved, and the producing process can be simplified.

Further, as with the first cover member 15b described above, the second cover member 41b may be configured by attaching cut segments to each face of the magnetic pole piece body 41a having a substantially square shape in a cross-section perpendicular to the axial direction, or may be configured by attaching segments in a substantially U-shape (so as to cover faces except one face) to be spliced.

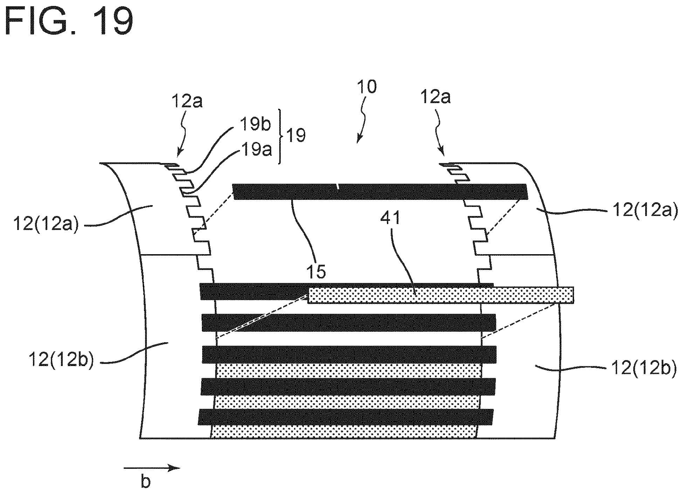

Next, an illustrated configuration example of the solid member 12 will be described. FIG. 19 is a schematic diagram showing a configuration of connection between the solid member 12 and the magnetic pole piece holder 10 in the magnetic pole piece device 1.

As described above, the solid member 12 is interposed between the end portion of the magnetic pole piece holder 10 in the axial direction b and the rotor end plate 11 to connect the end portion of the magnetic pole piece holder 10 and the rotor end plate 11. The solid member 12 is of substantially cylindrical shape, and has, at an end portion 12a adjacent to the magnetic pole piece holder 10 along the axial direction b, an uneven shape 19 in which concave and convex portions are alternately arranged along the circumferential direction.

The uneven shape 19 is complementary to the end portion of the magnetic pole piece holder 10 to be connected to the solid member 12. Specifically, a concave portion 19a1 of the uneven shape 19 corresponds to the core material 15 which is convex at the end portion of the magnetic pole piece holder 10, and a convex portion 19a2 corresponds to the magnetic pole piece 41 which is concave at the end portion of the magnetic pole piece holder 10. The uneven shape 19 facilitates positioning when the solid member 12 is mounted to the magnetic pole piece holder 10. This can eliminate jigs conventionally used for such positioning.

The uneven shape 19 can be formed by post-processing on the end portion 12a of the solid member 12 which is bulk-formed. For example, machining as post-processing allows formation of the uneven shape 19 with high accuracy. Since the solid member 12 is of substantially cylindrical shape, for example, if die-forming is used, it is difficult to maintain the accuracy of the radius of curvature due to spring-in occurring during thermoforming, but good shape accuracy is obtained by such machining to dimension.

The solid member 12 having the uneven shape 19 may be produced with a 3D printer. In this case, since curing or machining are not necessary, high curvature accuracy is obtained.

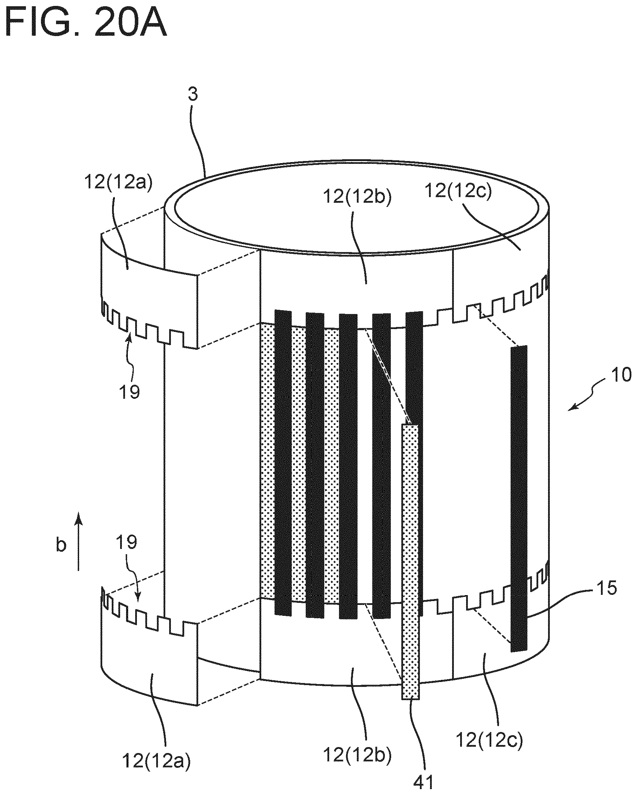

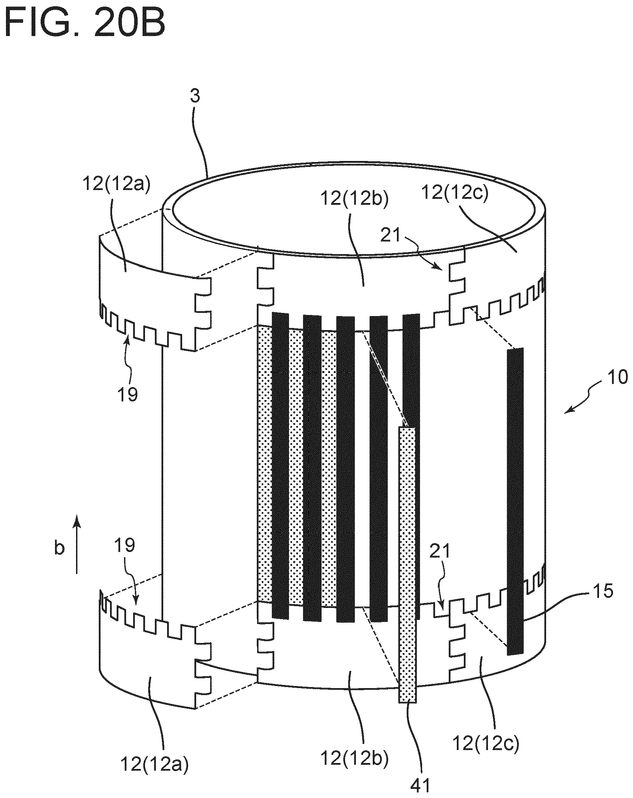

The solid member 12 having this configuration is mounted on the outer cover member 2 or the inner cover member 3 with an adhesive, for example. FIGs. 20A and 20B are each a schematic diagram showing another mounting example of the solid member 12 shown in FIG. 19 on the outer cover member 2 or the inner cover member 3. In the embodiment shown in FIG. 20A, the solid member 12 are divided along the circumferential direction into a plurality of sub members 12a, 12b, 12c, ..., and each sub member is mounted on the outer cover member 2 or the inner cover member 3 with an adhesive, for example. In the embodiment shown in FIG. 20A, while the adhesive is in an uncured state, a fixing jig is required to independently secure the plurality of sub members 12a, 12b, 12c, ..., to the outer cover member 2 or the inner cover member 3 to be mounted. In the embodiment shown in FIG. 20B, a complementary puzzle structure 21 is provided between adjacent sub members 12a, 12b, 12c, ..., so that they can be independently secured without using a fixing jig, which improves the workability.

FIGs. 20A and 20B show a state where, after the solid member 12 is mounted on the inner cover member 3, the magnetic pole pieces 41 and the core materials 15 are mounted on the solid member 12 fixed to the inner cover member 3. By mounting the solid member 12 on the inner cover member 3 before the magnetic pole pieces 41 and the core materials 15, the positioning accuracy of the magnetic pole pieces 41 and the core materials 15 to be mounted can be improved. This is advantageous in that good workability can be obtained even when the magnetic pole piece device 1 is large. For example, when the magnetic pole piece device 1 is large, mounting of the solid member 12 on the inner cover member 3 requires handling equipment such as a crane, but if the solid member 12 is mounted first with the handling equipment, since the remaining magnetic pole pieces 41 and core materials 15 are relatively lightweight, the handling equipment becomes unnecessary and the work can be simplified.

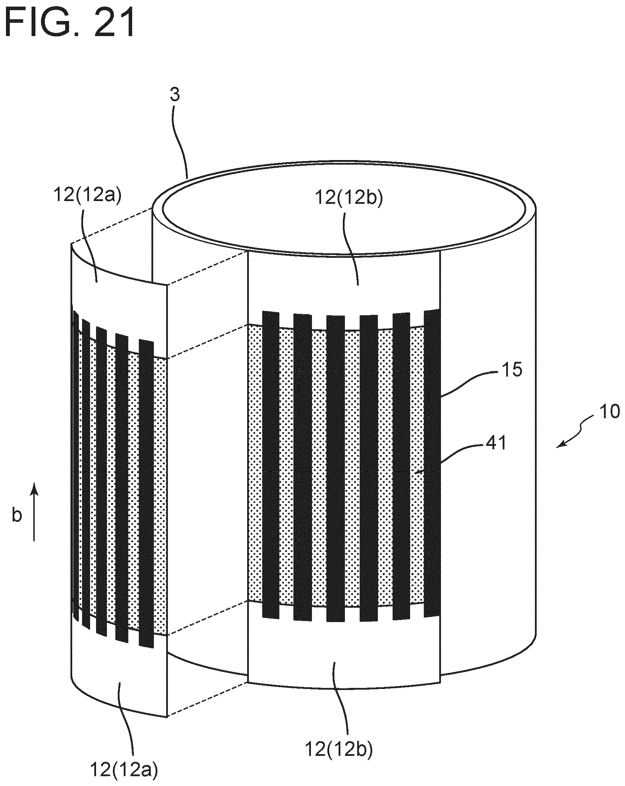

FIG. 21 is a schematic diagram showing another mounting example of the solid member 12. In the embodiment shown in FIG. 21, with the magnetic pole pieces 41 and the core materials 15 mounted in advance on the solid member 12, the solid member 12, the magnetic pole pieces 41, and the core materials 15 are integrally mounted on the inner cover member 3. This type of mounting also simplifies the work.

When the outer cover member 2, the inner cover member 3, and the wall members 20 are made of fiber reinforced plastic, the fiber directions of these members may be set such that the coefficient of thermal expansion is close to that of the magnetic pole pieces 41. This reduces the difference in the coefficient of thermal expansion between these members and the magnetic pole pieces 41 when heated during heat treatment or operation, so that interface peeling between these members and the magnetic pole pieces 41 can be suppressed.

In order to bring the coefficient of thermal expansion of these members closer to that of the magnetic pole pieces 41, for example, the fiber directions of the outer cover member 2, the inner cover member 3, and the wall members 20 may be set to avoid the axial direction b. Specifically, when the fiber direction is set at 90° to the axial direction b, centrifugal load and electromagnetic force acting on the magnetic pole pieces 41 can be effectively received. Further, when the fiber direction is set at 45° to the axial direction b, rotor torque load can be received.

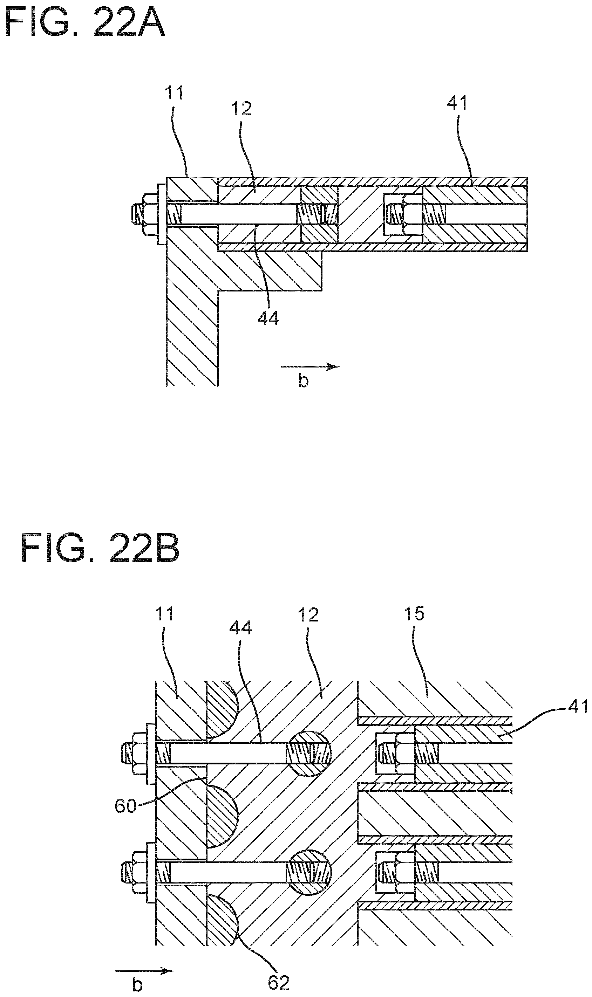

Next, a connecting structure between the solid member 12 and the rotor end plate 11 will be described. FIG. 22A is an example of a vertical cross-sectional view of the connecting structure including the solid member 12 and the rotor end plate 11 along the axial direction b. FIG. 22B is a plan view of the connecting structure of FIG. 22A viewed from the radially outer side.

In the embodiment shown in FIGs. 22A and 22B, the solid member 12 has a metal pad 62 disposed on an end surface 60 facing the rotor end plate 11 to be connected. On the end surface 60, a plurality of metal pads 62 are disposed along the circumferential direction. The metal pads 62 are disposed at positions that do not interfere with the fastening rod 44 described above. The distance between adjacent metal pads 62 is set to, for example, equal intervals. Each metal pad 62 has a substantially hemispherical shape and is formed of, for example, a metal material. The solid member 12 having the metal pad 62 can reduce shear load on the fastening bolt 44 and suppress wear of the end surface 60.

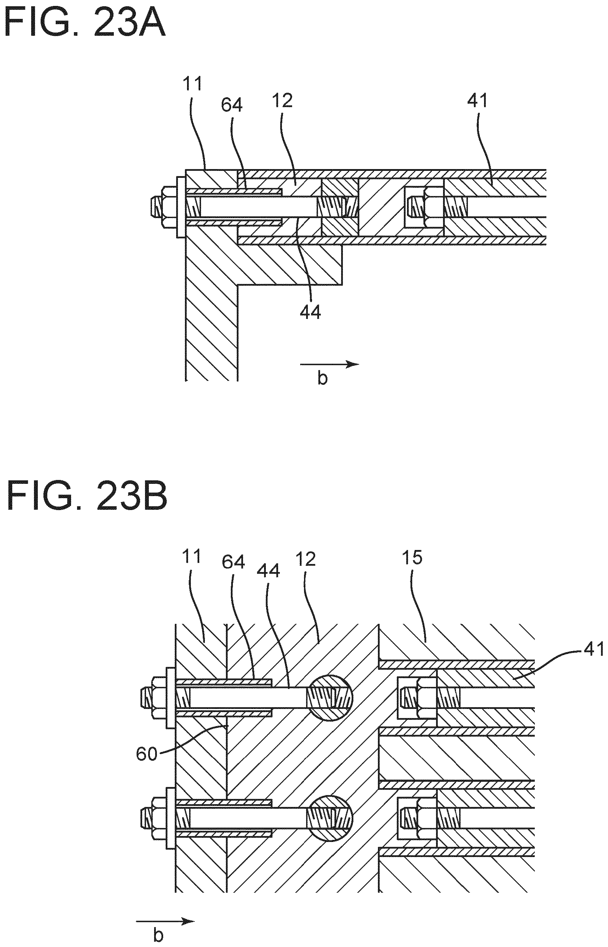

FIG. 23A is another example of a vertical cross-sectional view of the connecting structure including the solid member 12 and the rotor end plate 11 along the axial direction b. FIG. 23B is a plan view of the connecting structure of FIG. 23A viewed from the radially outer side.

In the embodiment shown in FIGs. 23A and 23B, the solid member 12 and the rotor end plate 11 are provided with a guide bush 64 disposed along the connecting bolt 44. By providing the guide bush 64, the shear force generated in the fastening bolt 44 is received by the guide bush 64, and the shear failure of the fastening bolt 44 can be effectively prevented, so that the reliability can be improved.

Further, the guide bush 64 is disposed substantially parallel to the axial direction b. With this configuration, by inserting the guide bush 64 into the hole portion 43 into which the fastening rod 44 is inserted, the guide bush 64 can be attached without additional machining.

Further, the guide bush 64 continuously extends from the solid member 12 to the rotor end plate 11. With this configuration, for example, when assembling the solid member 12 and the rotor end plate 11, by first attaching the guide bush 64 to the solid member 12 and then assembling the rotor end plate 11, the rotor end plate 11 can be positioned by the guide bush 64, so that the assembly dimensional accuracy can be effectively improved.

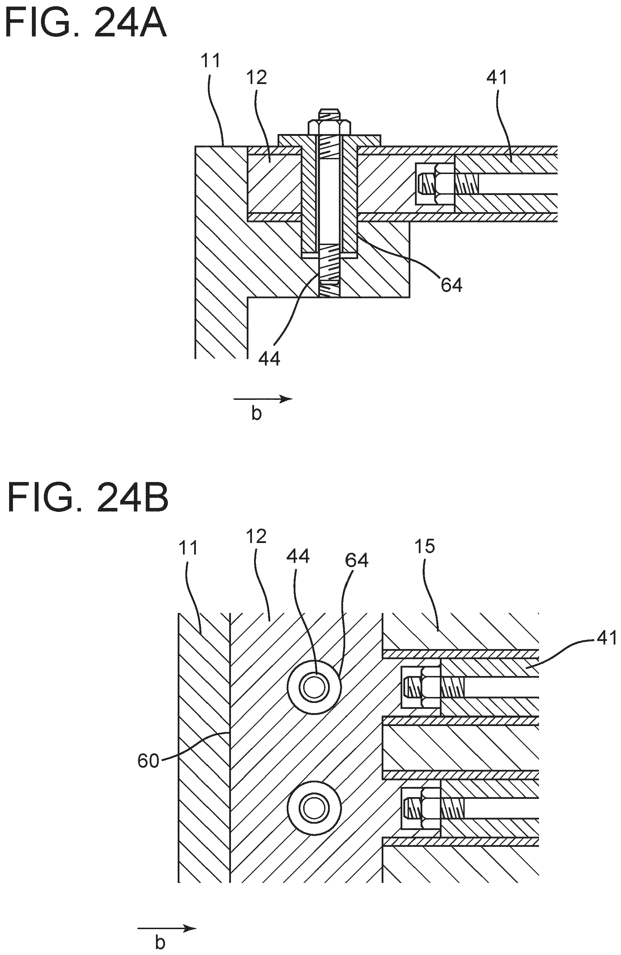

FIG. 24A is another example of a vertical cross-sectional view of the connecting structure including the solid member 12 and the rotor end plate 11 along the axial direction b. FIG. 24B is a plan view of the connecting structure of FIG. 24A viewed from the radially outer side.

In the embodiment shown in FIGs. 24A and 24B, the fastening bolt 44 is disposed perpendicular to the axial direction b to connect the solid member 12 and the rotor end plate 11. In this case, as in the above-described embodiment, by providing the guide bush 64 along the fastening bolt 44, the shear force generated in the fastening bolt 44 is received by the guide bush 64, and the shear failure of the fastening bolt 44 can be effectively prevented, as well as positioning in the axial direction b can be achieved, and the assembly dimensional accuracy can be effectively improved.

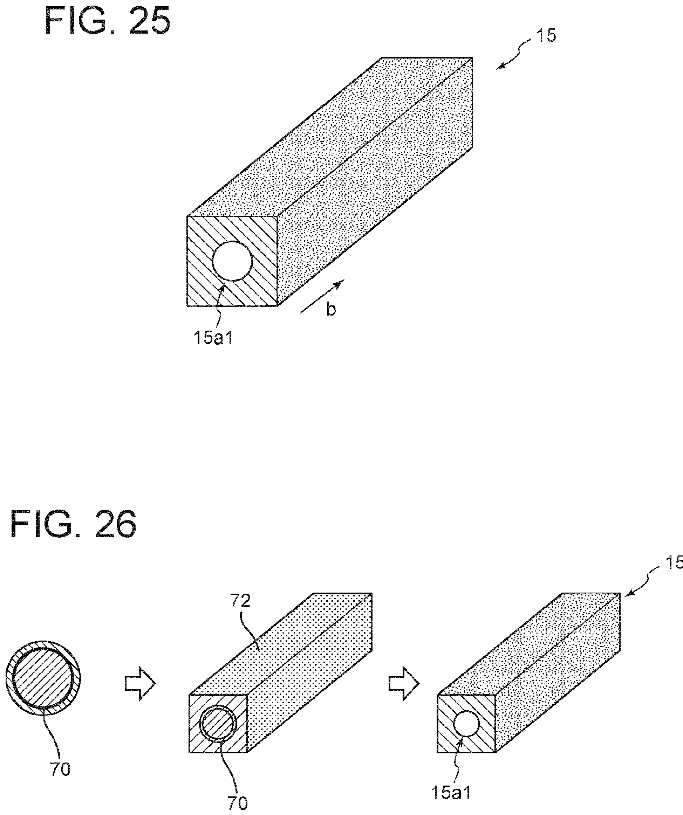

FIG. 25 is a perspective diagram showing another configuration example of the core material 15. The core material 15 may have a hollow structure with a hollow portion 15a1 extending along the axial direction b, like the core body 15a shown in FIG. 16C. In this case, by circulating a cooling medium such as cooling air through the hollow portion 15a1, the cooling performance can be improved with good structural strength.

FIG. 26 is a schematic diagram showing the production process of the core material 15 shown in FIG. 25. First, a core 70 having a substantially cylindrical shape extending along the axial direction b is prepared so as to correspond to the hollow portion 15a1. Then, a prepreg 72 for forming the core material 15 is wound along the outer surface of the core 70 and cured to form the core material 15. After that, the core is removed from the formed core material 15 (pulled out along the axial direction) to complete the core material 15. Generally, it is difficult to form the hollow portion 15a1 by machining the core material 15, which is elongated along the axial direction b, but by curing the prepreg 72 wound around the core 70 in this way, the core material 15 having a hollow structure can be produced without machining.

In the present embodiment, the case where the cross-sectional shape of the hollow portion 15a1 is substantially circular is illustrated, but the cross-sectional shape of the hollow portion 15a may be any shape such as a polygon or a star. Further, in the present embodiment, the case where the core material 15 has one hollow portion 15a1 is illustrated, but the core body 15a may have a plurality of hollow portions 15a1.

The core 70 may also be cured together with the core material 15 by using a prepreg material. In this case, the core material 15 and the core 70 are simultaneously cured, so that the forming process can be simplified.

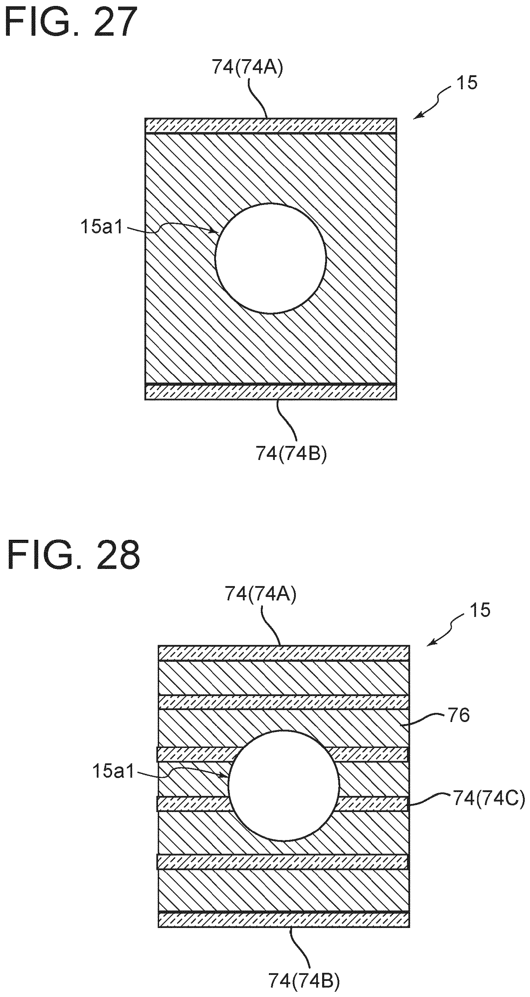

FIG. 27 is an example of a cross-sectional view of the core material 15 perpendicular to the axial direction b. A damping member 74 for damping vibration may be disposed on at least a part of a surface of the core material 15 that faces the outer cover member 2 or the inner cover member 3 constituting the magnetic pole piece holder 10. In FIG. 27, a first damping member 74A is disposed on a first surface 75A of the core material 15 facing the outer cover member 2, and a second damping member 74B is disposed on a second surface 75B facing the inner cover member 3. By providing such a damping member, the magnetic pole piece device 1 absorbs vibration and obtains good anti-vibration performance. In particular, the first damping member 74A disposed along the first surface 74A facing the outer cover member 2, which is easily affected by vibration, is likely to produce a damping action.

FIG. 28 is a modified example of FIG. 27. As in the modified example shown in FIG. 27, the core material 15 may be divided into a plurality of plate-shaped members 76 along the thickness direction. When the magnetic pole piece holder 10 has a divided structure, friction is caused between the plate-shaped members 76 with vibration, so that vibration energy is converted into thermal energy, and a good damping effect is obtained. In this case, third damping members 74C may be disposed between two adjacent plate-shaped members 76. By providing the third damping members 74C inside the core material 15, internal vibration propagation can be absorbed while being repeatedly reflected between the damping members, so that the damping effect can be expected to be improved.

The material constituting each damping member 74 is not limited, but for example, a polymer fiber reinforced composite material may be used. Since the polymer fiber reinforced composite material can be simultaneously cured with the outer cover member 2, the inner cover member 3, and the wall members made of fiber reinforced plastic, by integrally forming it with these members, better structural strength can be obtained. Further, the damping member 74 may be made of a resin-based highly elastic material. In this case, the elasticity of the damping member 74 absorbs vibration, so that the damping characteristic can be obtained more effectively.

Alternatively, sliding members may be disposed between two adjacent plate-shaped members 76 instead of the third damping members 74C. As the sliding members, a resin material such as Teflon (registered trademark) may be used, which can effectively suppress the wear of the divided members due to friction.

When the core material 15 is divided into the plurality of plate-shaped members 76, the natural frequency of the magnetic pole piece holder 10 may be adjusted by appropriately changing the division pattern. In this case, excellent damping characteristics can be obtained by setting the division pattern so that the natural frequency of the magnetic pole piece holder 10 is different from the vibration frequency generated in the magnetic pole piece holder 10. FIG. 28 shows an example of the division pattern with equal thickness, but the thickness may be adjusted, for example, so that the outer side is thinner and the inner side is thicker to obtain the required damping characteristics.

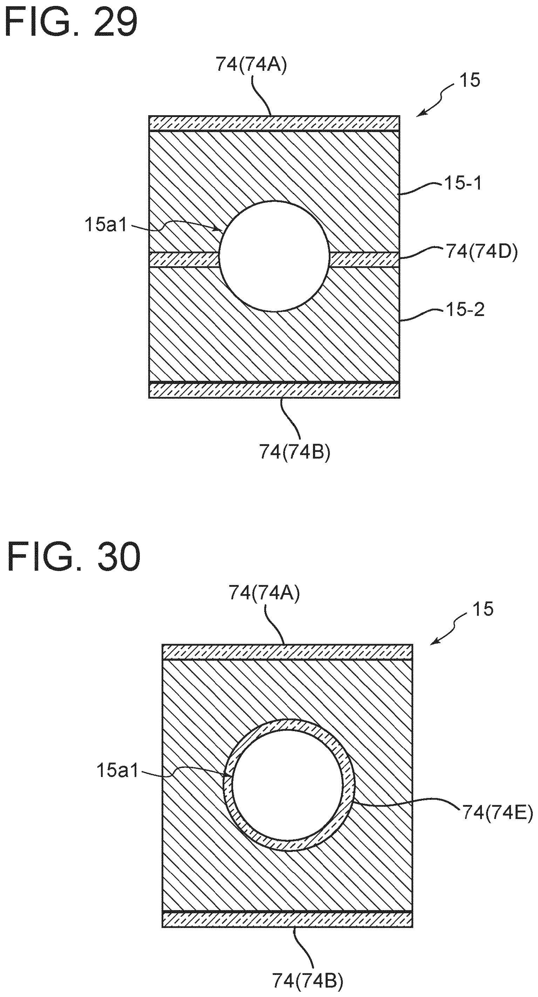

FIG. 29 is another modified example of FIG. 27. In this modified example, the core material 15 shown in FIG. 27 is divided into a first member 15-1 closer to the outer cover member 2 and a second member 15-2 closer to the inner cover member 3. In this case, a fourth damping member 74D may be disposed at the interface between the first member 15-1 and the second member 15-2 to improve the damping characteristics. Such a core material 15 is formed by laminating the materials of the first member 15-1 and the second member 15-2 individually to form the first member 15-1 and the second member 15-2, and then, when assembling the two members, laminating the fourth damping member 74D at the interface between the first member 15-1 and the second member 15-2.

In the case where an elastic adhesive is used as the fourth damping member 74D, after the first member 15-1 and the second member 15-2 are cured and formed, the fourth damping member 74D, which is an elastic adhesive, may be placed at the interface to bond the two members to complete the core material 15. This is expected to improve the internal quality of the magnetic pole piece holder 10.

FIG. 30 is another modified example of FIG. 27. In this modified example, in addition to the modified example of FIG. 29, a fifth damping member 74E is further provided along the hollow portion 15a1. The fifth damping member 74E can be arranged by winding a damping material around the outer surface of the core 70 when the hollow portion 15a1 is formed by using the core 70 as described above.

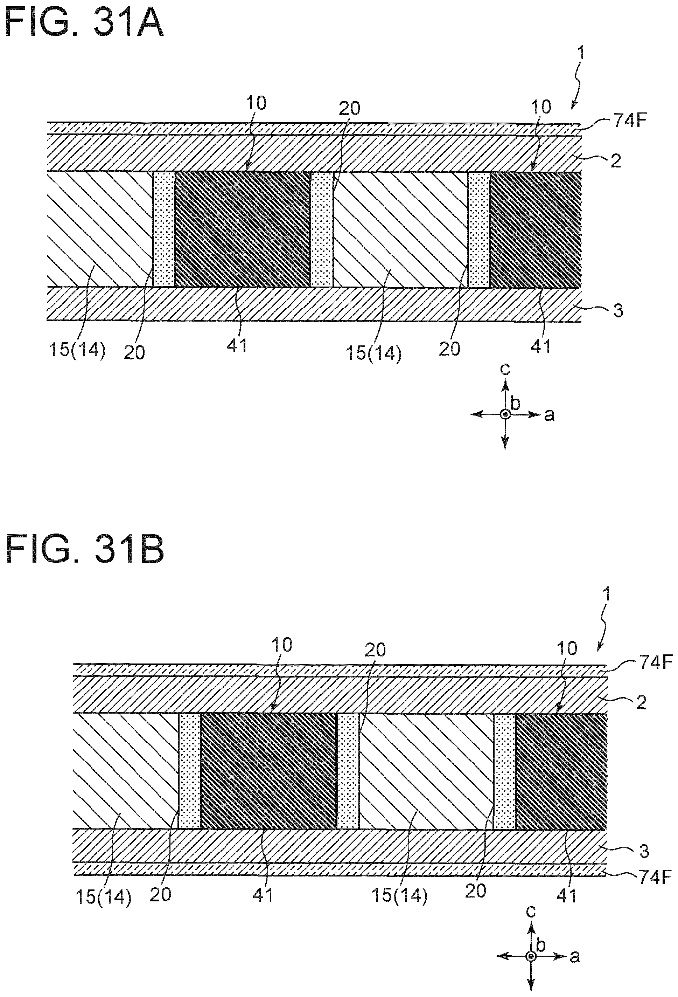

Additionally, a sixth damping member 74F may be provided on the outer surface of at least one of the outer cover member 2 or the inner cover member 3. FIG. 31A is a modified example of FIG. 6. In this modified example, the sixth damping member 74F is disposed on at least a part of the outer surface (outer surface on the radially outer side) of the outer cover member 2 when viewed in a cross-section perpendicular to the axial direction b. In this modified example, the sixth damping member 74F is widely disposed along the outer surface of the outer cover member 2. In the magnetic pole piece device 1, the damping characteristics can be improved by providing the sixth damping member 74F in this way. In particular, in response to the fact that strain tends to increase on the radially outer side during vibration, by providing the sixth damping member 74F on the outer surface of the outer cover member 2 as in this modified example, the damping characteristics can be effectively improved.

FIG. 31B is another modified example of FIG. 6. In this modified example, in addition to the modified example shown in FIG. 31A, the sixth damping member 74F is also disposed on at least a part of the outer surface (outer surface on the radially inner side) of the inner cover member 3. In this modified example, the sixth damping member 74F is widely disposed along the outer surface of the inner cover member 3. Thus, by providing the sixth damping members 74F on the outer surfaces of both the outer cover member 2 and the inner cover member 3, the damping characteristics of the magnetic pole piece device 1 can be further improved.

The sixth damping member 74F may be formed of a material including a fiber reinforced composite material such as a polymer fiber reinforced composite material. Since such a material can be simultaneously cured with the outer cover member 2 and the inner cover member 3 made of fiber reinforced plastic, by integrally forming the sixth damping member 74F with the outer cover member 2 and the inner cover member 3, it is possible to improve the damping characteristics while maintaining the structural strength.

The sixth damping member 74F may be provided only on the outer surface of the inner cover member 3.

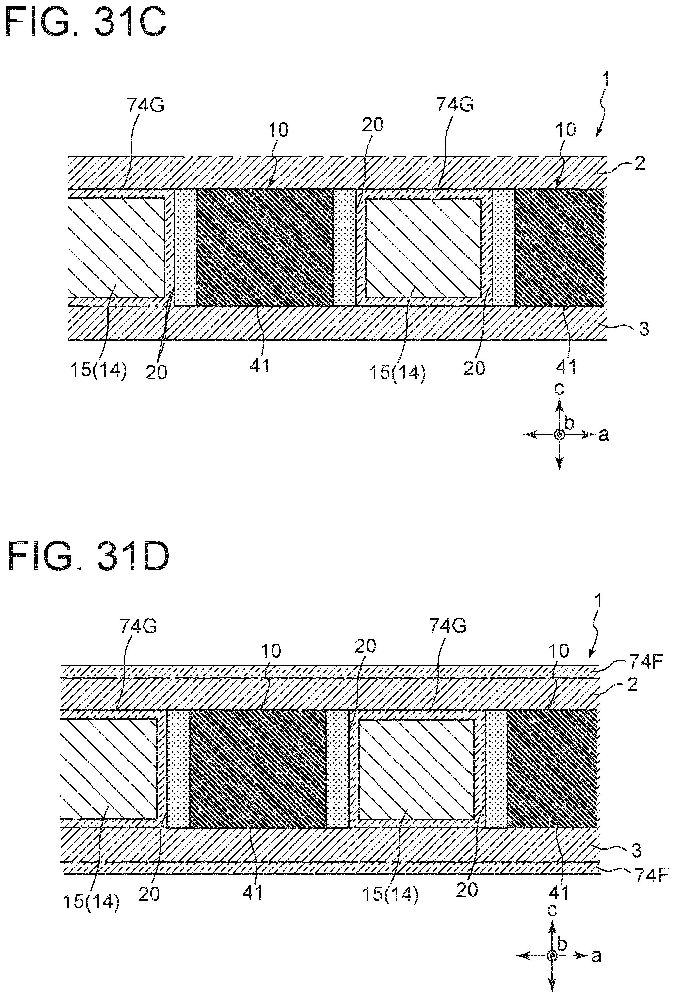

FIG. 31C is another modified example of FIG. 6. In this modified example, the seventh damping member 74G is disposed so as to at least partially surround the core material 15 when viewed in a cross-section perpendicular to the axial direction b. In FIG. 31C, the seventh damping member 74G is disposed so as to surround the entire circumference of the core material 15. In the magnetic pole piece device 1, the damping characteristics can be improved by providing the seventh damping member 74G in this way.

The seventh damping member 74G may be formed of a material including a fiber reinforced composite material such as a polymer fiber reinforced composite material, as with the sixth damping member 74F described above. Since such a material can be simultaneously cured with the outer cover member 2 and the inner cover member 3 made of fiber reinforced plastic, by integrally forming the seventh damping member 74G with the outer cover member 2 and the inner cover member 3, it is possible to improve the damping characteristics while maintaining the structural strength.

FIG. 31D is another modified example of FIG. 6. This modified example is a combination of the above-described modified examples, and the sixth damping member 74F is provided on the outer surface of each of the outer cover member 2 and the inner cover member 3, and the seventh damping member 74G is disposed so as to surround the core material 15. By providing both the sixth damping member 74F and the seventh damping member 74G in this way, the damping characteristics can be further improved.

In addition, the components in the above-described embodiments may be appropriately replaced with known components or the above-described embodiments may be appropriately combined.

The contents described in the above embodiments would be understood as follows, for instance.
(1) A magnetic pole piece device (e.g., the above-described magnetic pole piece device 1) for a magnetic gear according to an aspect is provided with: an outer circumferential cover member (e.g., the above-described outer circumferential cover member 2) and an inner circumferential cover member (e.g., the above-described inner circumferential cover member 3) coaxially disposed on an outer side and an inner side in a radial direction of a magnetic gear (e.g., the above-described magnetic gear 9), respectively, and each having a cylindrical shape; a magnetic pole piece holder (e.g., the above-described magnetic pole piece holder 10) formed by partitioning a cylindrical space (e.g., the above-described cylindrical space 8) formed between an inner circumferential surface of the outer circumferential cover member and an outer circumferential surface of the inner circumferential cover member by wall members (e.g., the above-described wall members 20) extending along the radial direction; and a magnetic pole piece (e.g., the above-described magnetic pole piece 41) held by the magnetic pole piece holder. The inner ring member, the outer ring member, and the wall members are integrally configured.

According to the above aspect (1), since the outer circumferential cover member and the inner circumferential cover member are connected to each other by the wall members extending in the radial direction, and these components are configured integrally, the magnetic pole piece device with excellent rigidity can be obtained. As a result, when the magnetic gear transmits power, it is possible to effectively avoid the risk of contact with the outer diameter side magnet field or the inner diameter side magnet field arranged with gaps due to deformation of the magnetic pole piece device.

(2) Further, in the above aspect (1), the outer circumferential cover member and the inner circumferential cover member are fixed to a rotor end plate (e.g., the above-described rotor end plate 11) via a connecting member (e.g., the above-described connecting member 13) embedded in a solid member (e.g., the above-described solid member 12) disposed in the cylindrical space.

According to the above aspect (2), the outer circumferential cover member, the inner circumferential cover member, and the rotor end plate are firmly fixed to each other via the connecting member embedded in the solid member, so that good rigidity can be obtained with a stable structure.

(3) In some aspects, in the above aspect (2), the solid member has a complementary shape with respect to an end portion of the rotor end plate.

According to the above aspect (3), since the solid member has a complementary shape with respect to an end portion of the rotor end plate, the solid member and the rotor end plate can be easily positioned by using the complementary shape when the solid member is connected to the rotor end plate.

(4) In some aspects, in the above aspect (2) or (3), the solid member has at least one metal pad (e.g., the above-described metal pad 62) disposed on an end surface facing the rotor end plate.

According to the above aspect (4), since the solid member has the metal pad, it is possible to reduce the shear load generated between the solid member and the rotor end plate when they are connected, and it is possible to effectively suppress wear on the end face facing the rotor end plate.

(5) In some aspects, in any one of the above aspects (2) to (4), the solid member and the rotor end plate are provided with a guide bush (e.g., the above-described guide bush 64) disposed along a connecting bolt.

According to the above aspect (5), by providing the guide bush, the shear force generated in the fastening bolt is received by the guide bush, and the shear failure of the fastening bolt can be effectively prevented, so that the reliability can be improved.

(6) In some aspects, in any one of the above aspects (2) to (5), the magnetic pole piece includes a plurality of magnetic pole plate materials (e.g., the above-described magnetic pole plate materials 41a) laminated along the axial direction. The plurality of magnetic pole plate materials is fixed to the solid member via a fastening rod (e.g., the above-described fastening rod 44) passing through a hole portion provided in each of the plurality of magnetic pole plate materials.

According to the above aspect (6), the magnetic pole piece composed of the plurality of the magnetic pole plate materials laminated along the axial direction is fixed by the fastening rod to the rotor end plate together with the outer circumferential cover member and the inner circumferential cover member via the solid member. By adopting such a structure, it is possible to more effectively improve the rigidity of the magnetic pole piece device.

(7) In some aspects, in any one of the above aspects (1) to (6), each of the outer circumferential cover member, the inner circumferential cover member, and the wall member includes carbon fiber reinforced plastic.

According to the above aspect (7), by integrally forming the outer circumferential cover member, the inner circumferential cover member, and the wall member using carbon fiber reinforced plastic which is lightweight, has high strength, and is excellent in formability, the magnetic pole piece device with good rigidity can be obtained.

(8) In some aspects, in the above aspect (7), at least one of the outer circumferential cover member or the inner circumferential cover member includes a first layer (e.g., the above-described first layer 2a, 3a) whose fiber direction includes a first direction along the circumferential direction, and a second layer (e.g., the above-described second layer 2b, 3b) whose fiber direction includes a second direction intersecting the first direction.

According to the above aspect (8), at least one of the outer circumferential cover member or the inner circumferential cover member is configured by combining a plurality of layers having different fiber directions from each other. Thus, when the magnetic gear transmits power, it is possible to effectively improve the rigidity against deflection caused in the magnetic pole piece device due to a load received from the outer diameter side magnet field or the inner diameter side magnet field or the rigidity against torsional deformation with respect to torque transmission.

(9) In some aspects, in the above aspect (7) or (8), the wall member includes pitch-based CFRP.

According to the above aspect (9), since pitch-based CFRP has more excellent thermal conductivity than PAN-based CFRP, when the wall member adjacent to the magnetic pole piece, which generates heat during operation, is composed of pitch-based CFRP, the heat dissipation function from the magnetic pole piece can be effectively improved.

(10) In some aspects, in any one of the above aspects (1) to (9), the device further comprises a core material (e.g., the above-described core material 15) filling an interjacent space (e.g., the above-described interjacent space 14) formed between adjacent magnetic pole piece holders in the cylindrical space.

According to the above aspect (10), since the interjacent space is filled with the core material, it is possible to more effectively improve the rigidity of the magnetic pole piece device.

(11) In some aspects, in the above aspect (10), the core material includes: a core body (e.g., the above-described core body 15a); and a first cover member (e.g., the above-described first cover member 15b) at least partially surrounding the core body.

According to the above aspect (11), the core material includes the core body and the first cover member. By at least partially covering the core body with the first cover member, good structural strength can be obtained, and in particular, weight reduction and workability improvement in manufacturing can be expected while maintaining the axial rigidity and torsional rigidity with respect to torque transmission.

(12) In some aspects, in the above aspect (10) or (11), a damping member (e.g., the above-described damping member 74) for damping vibration is disposed on at least a part of a surface of the core material that faces the outer cover member or the inner cover member.

According to the above aspect (12), since the magnetic pole piece device includes the damping member, vibration caused during operation can be absorbed, and good anti-vibration performance can be obtained.

(13) In some aspects, in any one of the above aspects (1) to (12), a damping member (e.g., the above-described sixth damping member 74F) is disposed so as to at least partially cover an outer surface of at least one of the outer cover member or the inner cover member.

According to the above aspect (13), since the outer surface of at least one of the outer cover member 2 or the inner cover member 3 is at least partially covered with the damping member, the damping characteristics of the magnetic pole piece device can be improved. In particular, in response to the fact that strain tends to increase on the radially outer side during vibration, by providing the damping member on the outer surface of the outer cover member, the damping characteristics can be effectively improved.

(14) In some aspects, in any one of the above aspects (10) to (13), a damping member (e.g., the above-described seventh damping member 74G) is disposed so as to at least partially cover the core material.

According to the above aspect (14), by providing the damping member so as to surround the entire circumference of the core material, the damping characteristics of the magnetic pole piece device can be improved. Further, for example, when the damping member is formed of a fiber reinforced composite material, since the damping member can be simultaneously cured with the outer cover member and the inner cover member, by integrally forming the damping member with the outer cover member and the inner cover member, it is possible to improve the damping characteristics while maintaining the structural strength.

(15) In some aspects, in any one of the above aspects (1) to (9), an interjacent space (e.g., the above-described interjacent space 14) formed between adjacent magnetic pole piece holders in the cylindrical space is formed as a hollow core. The hollow core communicates with outside through a cooling hole (e.g., the above-described cooling hole 17) opening along the radial direction in at least one of the outer circumferential cover member or the inner circumferential cover member.

According to the above aspect (15), by introducing a cooling medium into the interjacent space formed as the hollow core through the cooling hole provided in at least one of the outer circumferential cover member or the inner circumferential cover member, a good cooling effect can be obtained.

(16) In some aspects, in any one of the above aspects (1) to (15), the magnetic pole piece includes: a magnetic pole piece body (e.g., the above-described magnetic pole piece body 41a); and a second cover member (e.g., the above-described second cover member 41b) at least partially surrounding the magnetic pole piece body.

According to the above aspect (16), the magnetic pole piece includes the magnetic pole piece body and the second cover member. By at least partially covering the magnetic pole piece body with the second cover member, good structural strength can be obtained, and in particular, weight reduction and workability improvement in manufacturing can be expected while maintaining the axial rigidity and torsional rigidity with respect to torque transmission.

(17) In some aspects, in any one of the above aspects (1) to (16), a fiber direction of carbon fiber reinforced plastic constituting at least a part of the outer cover member, the inner cover member, and the wall member is set such that thermal expansion coefficient is close to that of the magnetic pole piece.

According to the above aspect (17), when the outer cover member, the inner cover member, and the wall members are made of fiber reinforced plastic, the fiber direction of at least the part of these members is set such that the coefficient of thermal expansion is close to that of the magnetic pole piece. This reduces the difference in the coefficient of thermal expansion between these members and the magnetic pole piece when heated during heat treatment or operation, so that interface peeling between these members and the magnetic pole piece can be effectively suppressed.

(18) A magnetic gear (e.g., the above-described magnetic gear 9) according to an aspect is provided with: the magnetic pole piece device according to any of the above aspects (1) to (8); an inner diameter side magnet field (e.g., the above-described inner diameter side magnet field 7) disposed on an inner circumferential side of the magnetic pole piece device; and an outer diameter side magnet field (e.g., the above-described outer diameter side magnet field 5) disposed on an outer circumferential side of the magnetic pole piece device.

According to the above aspect (18), since the magnetic pole piece device with excellent rigidity is included, when the magnetic gear transmits power, it is possible to effectively avoid the risk of contact with the outer diameter side magnet field or the inner diameter side magnet field arranged with gaps due to deformation of the magnetic pole piece device.

(19) A method of producing a magnetic pole piece device for a magnetic gear according to an aspect includes, for producing a magnetic pole piece device including: an outer circumferential cover member (e.g., the above-described outer circumferential cover member 2) and an inner circumferential cover member (e.g., the above-described inner circumferential cover member 3) coaxially disposed on an outer side and an inner side in a radial direction of a magnetic gear (e.g., the above-described magnetic gear 9), respectively, and each having a cylindrical shape; a magnetic pole piece holder (e.g., the above-described magnetic pole piece holder 10) formed by partitioning a cylindrical space (e.g., the above-described cylindrical space 8) formed between an inner circumferential surface of the outer circumferential cover member and an outer circumferential surface of the inner circumferential cover member by wall members (e.g., the above-described wall members 20) extending along the radial direction; and a magnetic pole piece (e.g., the above-described magnetic pole piece 41) held by the magnetic pole piece holder, in which the inner ring member, the outer ring member, and the wall members are integrally configured, a step of forming one of the outer circumferential cover member or the inner circumferential cover member integrally with the wall members to produce a first intermediate molded product (e.g., the above-described first intermediate molded product 54, 54'), a step of inserting the magnetic pole piece into a recess formed between the adjacent wall members of the first intermediate molded product to produce a second intermediate molded product (e.g., the above-described second intermediate molded product 55, 55'), and a step of mounting the other of the outer circumferential cover member or the inner circumferential cover member on the second intermediate molded product to be integrally formed.

According to the above aspect (19), by integrally forming one of the outer circumferential cover member or the inner circumferential cover member with the wall members, the first intermediate molded product can be produced with good shape accuracy. This eliminates the need for fine adjustment of the magnetic pole piece holder by additional processing when the magnetic pole piece is inserted into the magnetic pole piece holder. Further, by using the second intermediate molded product, which is obtained by inserting the magnetic pole piece into the first intermediate molded product, as a new mold to further integrally form the inner circumferential cover member, the shape accuracy of the inner circumferential cover member is improved, and extra processing and bonding steps are eliminated, resulting in improved productivity and reduced cost.

(20) Further, in the above aspect (19), the second intermediate molded product is produced by integrally forming one of the outer circumferential cover member or the inner circumferential cover member with the wall members and the magnetic pole piece when the first intermediate molded product is integrally formed.

According to the above aspect (20), by integrally forming the magnetic pole piece when one of the outer circumferential cover member or the inner circumferential cover member is integrally formed with the wall members, the production process can be simplified, resulting in further improved productivity and reduced cost.

### Reference Signs List

- 1: Magnetic pole piece device
- 2: Outer circumferential cover member
- 3: Inner circumferential cover member
- 5: Outer diameter side magnet field
- 6: Coil
- 7: Inner diameter side magnet field
- 8: Cylindrical space
- 9: Magnetic gear
- 10: Magnetic pole piece holder
- 11: Rotor end plate
- 12: Solid member
- 13: Connecting member
- 14: Interjacent space
- 15: Core material
- 17: Cooling hole
- 20: Wall member
- 41: Magnetic pole piece
- 41a: Magnetic pole plate material
- 43: Hole portion
- 44: Fastening rod
- 49, 56: Vacuum bag
- 50: Mold
- 51: Magnetic pole pair
- 52: Support member
- 53, 57: Rubber heater
- 54: First intermediate molded product
- 55: Second intermediate molded product
- 59: Heater
- 71: Inner diameter magnetic pole pair
- 72: Inner diameter support member
- D: Cooling medium
- G: Gap
- H: Housing

## Claims

1. A magnetic pole piece device (1) for a magnetic gear (9), comprising:
an outer circumferential cover member (2) and an inner circumferential cover member (3) coaxially disposed on an outer side and an inner side in a radial direction of a magnetic gear (9), respectively, and each having a cylindrical shape;
a magnetic pole piece holder (10) formed by partitioning a cylindrical space formed between an inner circumferential surface of the outer circumferential cover member (2) and an outer circumferential surface of the inner circumferential cover member (3) by wall members (20) extending along the radial direction; and
a magnetic pole piece (41) held by the magnetic pole piece holder (10), wherein the inner circumferential cover member (3), the outer circumferential cover member (2), and the wall members (20) are integrally configured,
**characterized in that**
the outer circumferential cover member (2) and the inner circumferential cover member (3) are fixed between two rotor end plates (11) via a connecting member (13) embedded in a respective solid member (12) disposed in the cylindrical space on both sides in an axial direction of the magnetic gear (9), and
wherein each of the solid members (12) is configured to fill a space surrounded by an inner circumferential surface of the outer circumferential cover member (2), an outer circumferential surface of the inner circumferential cover member (3), and an end surface of each of the rotor end plates (11).

2. The magnetic pole piece device (1) for a magnetic gear (9) according to claim 1, wherein the solid member (12) has a complementary shape to engage with an uneven shape provided at an end portion of the magnetic pole piece holder (10).

3. The magnetic pole piece device (1) for a magnetic gear (9) according to claim 1 or 2, wherein the solid member (12) has at least one metal pad (62) disposed on an end surface facing the rotor end plate (11).

4. The magnetic pole piece device (1) for a magnetic gear (9) according to any one of claims 1 to 3, wherein the connecting member is a bolt (44), the solid member (12) and the rotor end plate (11) are provided with a guide bush (64) disposed along the bolt (44).

5. The magnetic pole piece device (1) for a magnetic gear (9) according to any one of claims 1 to 4, wherein the magnetic pole piece (41) includes a plurality of magnetic pole plate materials (41a) laminated along an axial direction (b) of the magnetic gear (9), and
wherein the plurality of magnetic pole plate materials (41a) is fixed to the solid member (12) via a fastening rod (44) passing through a hole portion provided in each of the plurality of magnetic pole plate materials (41a).

6. The magnetic pole piece device (1) for a magnetic gear (9) according to any one of claims 1 to 5, wherein each of the outer circumferential cover member (2), the inner circumferential cover member (3), and the wall member (20) includes carbon fiber reinforced plastic.

7. The magnetic pole piece device (1) for a magnetic gear (9) according to claim 6, wherein at least one of the outer circumferential cover member (2) or the inner circumferential cover member (3) includes a first layer (2a, 3a) in which a fiber direction included in the carbon fiber reinforced plastic has a first direction along a circumferential direction of the magnetic gear, and a second layer (2b, 3b) in which the fiber direction has a second direction intersecting the first direction.

8. The magnetic pole piece device (1) for a magnetic gear (9) according to claim 6 or 7, wherein the wall member (20) includes pitch-based CFRP.

9. The magnetic pole piece device (1) for a magnetic gear (9) according to any one of claims 1 to 8, further comprising a core material (15) filling an interjacent space (14) formed between adjacent magnetic pole piece holders (10) in the cylindrical space.

10. The magnetic pole piece device (1) for a magnetic gear (9) according to claim 9, wherein the core material (15) includes:
a core body (15a); and
a first cover member (15b) at least partially surrounding the core body (15a).

11. The magnetic pole piece device (1) for a magnetic gear (9) according to claim 9 or 10, wherein a damping member (74) for damping vibration is disposed on at least a part of a surface of the core material (15) that faces the outer cover member (2) or the inner cover member (3).

12. The magnetic pole piece device (1) for a magnetic gear (9) according to any one of claims 1 to 11, wherein a damping member (74) is disposed so as to at least partially cover an outer surface of at least one of the outer cover member (2) or the inner cover member (3).

13. The magnetic pole piece device (1) for a magnetic gear (9) according to claim 10, wherein a damping member (74) is disposed so as to at least partially cover the core material (15).

14. The magnetic pole piece device (1) for a magnetic gear (3) according to any one of claims 1 to 8, wherein an interjacent space (14) formed between adjacent magnetic pole piece holders (10) in the cylindrical space is formed as a hollow core, and wherein the hollow core communicates with outside through a cooling hole (17) opening along the radial direction in at least one of the outer circumferential cover member (2) or the inner circumferential cover member (3).

15. The magnetic pole piece device (1) for a magnetic gear (9) according to any one of claims 1 to 14, wherein the magnetic pole piece includes:
a magnetic pole piece body (41a); and
a second cover member (41b) at least partially surrounding the magnetic pole piece body.

16. The magnetic pole piece device (1) for a magnetic gear (9) according to any one of claims 1 to 15, wherein a fiber direction of carbon fiber reinforced plastic constituting at least a part of the outer cover member (2), the inner cover member (3), and the wall member (20) is set such that thermal expansion coefficient is close to that of the magnetic pole piece.

17. A magnetic gear (9), comprising:
the magnetic pole piece device (1) according to any one of claims 1 to 16; an inner diameter side magnet field disposed on an inner circumferential side of the magnetic pole piece device (1); and an outer diameter side magnet field disposed on an outer circumferential side of the magnetic pole piece device (1).

18. A method of producing a magnetic pole piece device (1) for a magnetic gear (9) including:
an outer circumferential cover member (2) and an inner circumferential cover member (3) coaxially disposed on an outer side and an inner side in a radial direction of a magnetic gear (9), respectively, and each having a cylindrical shape;
a magnetic pole piece holder (10) formed by partitioning a cylindrical space formed between an inner circumferential surface of the outer circumferential cover member (2) and an outer circumferential surface of the inner circumferential cover member (3) by wall members (20) extending along the radial direction; and a magnetic pole piece (41) held by the magnetic pole piece holder (10), wherein the inner circumferential cover member (2), the outer circumferential cover member (2), and the wall members (20) are integrally configured, and
wherein the outer circumferential cover member (2) and the inner circumferential cover member (3) are fixed between two rotor end plates (11) via a connecting member (13) embedded in respective solid members (12) disposed in the cylindrical space on both sides in an axial direction of the magnetic gear (9), and
wherein each of the solid members (12) is configured to fill a space surrounded by an inner circumferential surface of the outer circumferential cover member (2), an outer circumferential surface of the inner circumferential cover member (3), and an end surface of each of the rotor end plates (11),
wherein the method comprises:
a step of forming one of the outer circumferential cover member (2) or the inner circumferential cover member (3) integrally with the wall members (20) to produce a first intermediate molded product;
a step of inserting the magnetic pole piece (41) into a recess formed between the adjacent wall members of the first intermediate molded product to produce a second intermediate molded product; and
a step of mounting the other of the outer circumferential cover member (2) or the inner circumferential cover member (3) on the second intermediate molded product to be integrally formed.

19. The method of producing a magnetic pole piece device (1) for a magnetic gear (9) according to claim 18, wherein the second intermediate molded product is produced by integrally forming one of the outer circumferential cover member (2) or the inner circumferential cover member (3) with the wall members (20) and the magnetic pole piece (41) when the first intermediate molded product is integrally formed.

## Patentansprüche

1. Magnetpolstückvorrichtung (1) für ein Magnetgetriebe (9), umfassend:
ein Außenumfangsabdeckelement (2) und ein Innenumfangsabdeckelement (3), die koaxial auf einer Außenseite beziehungsweise einer Innenseite in einer radialen Richtung eines Magnetgetriebes (9) angeordnet sind und jeweils eine zylindrische Form aufweisen;
einen Magnetpolstückhalter (10), der durch Unterteilen eines zwischen einer Innenumfangsoberfläche des Außenumfangsabdeckelements (2) und einer Außenumfangsoberfläche des Innenumfangsabdeckelements (3) ausgebildeten zylindrischen Raums durch sich entlang der radialen Richtung erstreckende Wandelemente (20) ausgebildet ist, und
ein Magnetpolstück (41), das von dem Magnetpolstückhalter (10) gehalten wird, wobei das Innenumfangsabdeckelement (3), das Außenumfangsabdeckelement (2) und die Wandelemente (20) einstückig ausgelegt sind,
**dadurch gekennzeichnet, dass**
das Außenumfangsabdeckelement (2) und das
Innenumfangsabdeckelement (3) über ein in ein jeweiliges Massivelement (12), das in dem zylindrischen Raum auf beiden Seiten in einer axialen Richtung des Magnetgetriebes (9) angeordnet ist, eingebettetes Verbindungselement (13) zwischen zwei Rotorendplatten (11) fixiert sind, und
wobei jedes der Massivelemente (12) ausgelegt ist, um einen Raum zu füllen, der durch eine Innenumfangsoberfläche des Außenumfangsabdeckelements (2), eine Außenumfangsoberfläche des Innenumfangsabdeckelements (3) und eine Endoberfläche jeder der Rotorendplatten (11) umgeben ist.

2. Magnetpolstückvorrichtung (1) für ein Magnetgetriebe (9) nach Anspruch 1, wobei das Massivelement (12) eine komplementäre Form aufweist, um mit einer unebenen Form in Eingri6 zu gelangen, die an einem Endabschnitt des Magnetpolstückhalters (10) vorgesehen ist.

3. Magnetpolstückvorrichtung (1) für ein Magnetgetriebe (9) nach Anspruch 1 oder 2, wobei das Massivelement (12) mindestens ein Metallplättchen (62) aufweist, das an einer der Rotorendplatte (11) zugewandten Endoberfläche angeordnet ist.

4. Magnetpolstückvorrichtung (1) für ein Magnetgetriebe (9) nach einem der Ansprüche 1 bis 3, wobei das Verbindungselement ein Bolzen (44) ist und das Massivelement (12) sowie die Rotorendplatte (11) mit einer entlang des Bolzens (44) angeordneten Führungsbuchse (64) versehen sind.

5. Magnetpolstückvorrichtung (1) für ein Magnetgetriebe (9) nach einem der Ansprüche 1 bis 4, wobei das Magnetpolstück (41) eine Vielzahl von Magnetpolplattenmaterialien (41a) beinhaltet, die entlang einer axialen Richtung (b) des Magnetgetriebes (9) laminiert sind, und wobei die Vielzahl von Magnetpolplattenmaterialien (41a) über eine Befestigungsstange (44), die durch einen in jedem der Vielzahl von Magnetpolplattenmaterialien (41a) vorgesehenen Lochabschnitt verläuft, an dem Massivelement (12) fixiert ist.

6. Magnetpolstückvorrichtung (1) für ein Magnetgetriebe (9) nach einem der Ansprüche 1 bis 5, wobei sowohl das Außenumfangsabdeckelement (2) als auch das Innenumfangsabdeckelement (3) und das Wandelement (20) kohlensto6faserverstärkten Kunststo6 beinhalten.

7. Magnetpolstückvorrichtung (1) für ein Magnetgetriebe (9) nach Anspruch 6, wobei mindestens eines von dem Außenumfangsabdeckelement (2) oder dem Innenumfangsabdeckelement (3) eine erste Schicht (2a, 3a) beinhaltet, in der eine in dem kohlensto6faserverstärkten Kunststo6 enthaltene Faserrichtung eine erste Richtung entlang einer Umfangsrichtung des Magnetgetriebes aufweist, sowie eine zweite Schicht (2b, 3b), in der die Faserrichtung eine zweite Richtung aufweist, die die erste Richtung schneidet.

8. Magnetpolstückvorrichtung (1) für ein Magnetgetriebe (9) nach Anspruch 6 oder 7, wobei das Wandelement (20) pechbasierten CFK beinhaltet.

9. Magnetpolstückvorrichtung (1) für ein Magnetgetriebe (9) nach einem der Ansprüche 1 bis 8, ferner umfassend ein Kernmaterial (15), das einen Zwischenraum (14) füllt, der zwischen benachbarten Magnetpolstückhaltern (10) in dem zylindrischen Raum ausgebildet ist.

10. Magnetpolstückvorrichtung (1) für ein Magnetgetriebe (9) nach Anspruch 9, wobei das Kernmaterial (15) Folgendes beinhaltet:
einen Kernkörper (15a) und
ein erstes Abdeckelement (15b), das den Kernkörper (15a) zumindest teilweise umgibt.

11. Magnetpolstückvorrichtung (1) für ein Magnetgetriebe (9) nach Anspruch 9 oder 10, wobei ein Dämpfungselement (74) zur Dämpfung von Schwingungen auf mindestens einem Teil einer Oberfläche des Kernmaterials (15), die dem Außenabdeckelement (2) oder dem Innenabdeckelement (3) zugewandt ist, angeordnet ist.

12. Magnetpolstückvorrichtung (1) für ein Magnetgetriebe (9) nach einem der Ansprüche 1 bis 11, wobei ein Dämpfungselement (74) so angeordnet ist, dass es eine Außenoberfläche mindestens eines von dem Außenabdeckelement (2) oder dem Innenabdeckelement (3) zumindest teilweise bedeckt.

13. Magnetpolstückvorrichtung (1) für ein Magnetgetriebe (9) nach Anspruch 10, wobei ein Dämpfungselement (74) so angeordnet ist, dass es das Kernmaterial (15) zumindest teilweise bedeckt.

14. Magnetpolstückvorrichtung (1) für ein Magnetgetriebe (3) nach einem der Ansprüche 1 bis 8, wobei ein zwischen benachbarten Magnetpolstückhaltern (10) in dem zylindrischen Raum ausgebildeter Zwischenraum (14) als Hohlkern ausgebildet ist, und wobei der Hohlkern mit der Außenseite über ein Kühlungsloch (17) kommuniziert, das sich entlang der radialen Richtung in mindestens einem von dem Außenumfangsabdeckelement (2) oder dem Innenumfangsabdeckelement (3) ö6net.

15. Magnetpolstückvorrichtung (1) für ein Magnetgetriebe (9) nach einem der Ansprüche 1 bis 14, wobei das Magnetpolstück Folgendes beinhaltet:
einen Magnetpolstückkörper (41a) und
ein zweites Abdeckelement (41b), das den Magnetpolstückkörper zumindest teilweise umgibt.

16. Magnetpolstückvorrichtung (1) für ein Magnetgetriebe (9) nach einem der Ansprüche 1 bis 15, wobei eine Faserrichtung von kohlenstofffaserverstärktem Kunststoff, aus dem zumindest ein Teil des Außenabdeckelements (2), des Innenabdeckelements (3) und des Wandelements (20) besteht, so festgelegt ist, dass der Wärmeausdehnungskoeffizient nahe an dem des Magnetpolstücks liegt.

17. Magnetgetriebe (9), umfassend:
die Magnetpolstückvorrichtung (1) nach einem der Ansprüche 1 bis 16, ein auf einer Innenumfangsseite der Magnetpolstückvorrichtung (1) angeordnetes Innendurchmesserseitenmagnetfeld und ein auf einer Außenumfangsseite der Magnetpolstückvorrichtung (1) angeordnetes Außendurchmesserseitenmagnetfeld.

18. Verfahren zur Herstellung einer Magnetpolstückvorrichtung (1) für ein Magnetgetriebe (9), umfassend:
ein Außenumfangsabdeckelement (2) und ein Innenumfangsabdeckelement (3), die koaxial auf einer Außenseite beziehungsweise einer Innenseite in einer radialen Richtung eines Magnetgetriebes (9) angeordnet sind und jeweils eine zylindrische Form aufweisen;
einen Magnetpolstückhalter (10), der durch Unterteilen eines zwischen einer Innenumfangsoberfläche des Außenumfangsabdeckelements (2) und einer Außenumfangsoberfläche des Innenumfangsabdeckelements (3) ausgebildeten zylindrischen Raums durch sich entlang der radialen Richtung erstreckende Wandelemente (20) ausgebildet ist, und
ein Magnetpolstück (41), das von dem Magnetpolstückhalter (10) gehalten wird, wobei das Innenumfangsabdeckelement (2), das Außenumfangsabdeckelement (2) und die Wandelemente (20) einstückig ausgelegt sind, und
wobei das Außenumfangsabdeckelement (2) und das Innenumfangsabdeckelement (3) über ein in jeweilige Massivelemente (12), die in dem zylindrischen Raum auf beiden Seiten in einer axialen Richtung des Magnetgetriebes (9) angeordnet sind, eingebettetes Verbindungselement (13) zwischen zwei Rotorendplatten (11) fixiert sind, und
wobei jedes der Massivelemente (12) ausgelegt ist, um einen Raum zu füllen, der durch eine Innenumfangsoberfläche des Außenumfangsabdeckelements (2), eine Außenumfangsoberfläche des Innenumfangsabdeckelements (3) und eine Endoberfläche jeder der Rotorendplatten (11) umgeben ist,
wobei das Verfahren Folgendes umfasst:
einen Schritt des Ausbildens eines von dem Außenumfangsabdeckelement (2) oder dem Innenumfangsabdeckelement (3) einstückig mit den Wandelementen (20), um ein erstes Zwischenformteil herzustellen;
einen Schritt des Einsetzens des Magnetpolstücks (41) in eine zwischen den benachbarten Wandelementen des ersten Zwischenformteils ausgebildete Vertiefung, um ein zweites Zwischenformteil herzustellen, und
einen Schritt des Montierens des jeweils anderen von dem Außenumfangsabdeckelement (2) oder dem Innenumfangsabdeckelement (3) auf dem zweiten Zwischenformteil, damit dieses einstückig ausgebildet wird.

19. Verfahren zur Herstellung einer Magnetpolstückvorrichtung (1) für ein Magnetgetriebe (9) nach Anspruch 18, wobei das zweite Zwischenformteil durch einstückiges Ausbilden eines von dem Außenumfangsabdeckelement (2) oder dem Innenumfangsabdeckelement (3) mit den Wandelementen (20) und dem Magnetpolstück (41) hergestellt wird, wenn das erste Zwischenformteil einstückig ausgebildet wird.

## Revendications

1. Dispositif à pièce polaire magnétique (1) pour un engrenage magnétique (9), comprenant :
un élément de recouvrement circonférentiel externe (2) et un élément de recouvrement circonférentiel interne (3) disposés de manière coaxiale sur un côté externe et un côté interne dans une direction radiale d'un engrenage magnétique (9), respectivement, et ayant chacun une forme cylindrique ;
un support de pièce polaire magnétique (10) formé par le cloisonnement d'un espace cylindrique formé entre une surface circonférentielle interne de l'élément de recouvrement circonférentiel externe (2) et une surface circonférentielle externe de l'élément de recouvrement circonférentiel interne (3) par des éléments de paroi (20) s'étendant le long de la direction radiale ; et
une pièce polaire magnétique (41) portée par le support de pièce polaire magnétique (10), dans lequel l'élément de recouvrement circonférentiel interne (3), l'élément de recouvrement circonférentiel externe (2) et les éléments de paroi (20) sont configurés d'un seul tenant,
**caractérisé en ce que**
l'élément de recouvrement circonférentiel externe (2) et l'élément de recouvrement circonférentiel interne (3) sont fixés entre deux plaques d'extrémité de rotor (11) par l'intermédiaire d'un élément de liaison (13) noyé dans un élément plein (12) respectif disposé dans l'espace cylindrique sur les deux côtés dans une direction axiale de l'engrenage magnétique (9), et
dans lequel chacun des éléments pleins (12) est configuré pour remplir un espace encerclé par une surface circonférentielle interne de l'élément de recouvrement circonférentiel externe (2), une surface circonférentielle externe de l'élément de recouvrement circonférentiel interne (3) et une surface d'extrémité de chacune des plaques d'extrémité de rotor (11).

2. Dispositif à pièce polaire magnétique (1) pour un engrenage magnétique (9) selon la revendication 1, dans lequel l'élément plein (12) possède une forme complémentaire pour se mettre en prise avec une forme irrégulière ménagée au niveau d'une portion d'extrémité du support de pièce polaire magnétique (10).

3. Dispositif à pièce polaire magnétique (1) pour un engrenage magnétique (9) selon la revendication 1 ou 2, dans lequel l'élément plein (12) possède au moins un plot métallique (62) disposé sur une surface d'extrémité faisant face à la plaque d'extrémité de rotor (11).

4. Dispositif à pièce polaire magnétique (1) pour un engrenage magnétique (9) selon l'une quelconque des revendications 1 à 3, dans lequel l'élément de liaison est un boulon (44), et l'élément plein (12) et la plaque d'extrémité de rotor (11) sont munis d'une douille de guidage (64) disposée le long du boulon (44).

5. Dispositif à pièce polaire magnétique (1) pour un engrenage magnétique (9) selon l'une quelconque des revendications 1 à 4, dans lequel la pièce polaire magnétique (41) inclut une pluralité de matériaux de plaque polaire magnétique (41a) stratifiés le long d'une direction axiale (b) de l'engrenage magnétique (9), et
dans lequel la pluralité de matériaux de plaque polaire magnétique (41a) est fixée à l'élément plein (12) par l'intermédiaire d'une tige de fixation (44) traversant une portion de trou ménagée dans chacun de la pluralité de matériaux de plaque polaire magnétique (41a).

6. Dispositif à pièce polaire magnétique (1) pour un engrenage magnétique (9) selon l'une quelconque des revendications 1 à 5, dans lequel chacun parmi l'élément de recouvrement circonférentiel externe (2), l'élément de recouvrement circonférentiel interne (3) et l'élément de paroi (20) inclut du plastique renforcé par des fibres de carbone.

7. Dispositif à pièce polaire magnétique (1) pour un engrenage magnétique (9) selon la revendication 6, dans lequel au moins l'un parmi l'élément de recouvrement circonférentiel externe (2) ou l'élément de recouvrement circonférentiel interne (3) inclut une première couche (2a, 3a) dans laquelle une direction des fibres incluses dans le plastique renforcé par des fibres de carbone possède une première direction le long d'une direction circonférentielle de l'engrenage magnétique, et une seconde couche (2b, 3b) dans laquelle la direction des fibres possède une seconde direction faisant intersection avec la première direction.

8. Dispositif à pièce polaire magnétique (1) pour un engrenage magnétique (9) selon la revendication 6 ou 7, dans lequel l'élément de paroi (20) inclut du plastique renforcé par des fibres de carbone, CFRP, à base de brai.

9. Dispositif à pièce polaire magnétique (1) pour un engrenage magnétique (9) selon l'une quelconque des revendications 1 à 8, comprenant en outre un matériau de noyau (15) remplissant un espace intermédiaire (14) formé entre des supports de pièce polaire magnétique (10) adjacents dans l'espace cylindrique.

10. Dispositif à pièce polaire magnétique (1) pour un engrenage magnétique (9) selon la revendication 9, dans lequel le matériau de noyau (15) inclut :
un corps de noyau (15a) ; et
un premier élément de recouvrement (15b) encerclant au moins partiellement le corps de noyau (15a).

11. Dispositif à pièce polaire magnétique (1) pour un engrenage magnétique (9) selon la revendication 9 ou 10, dans lequel un élément d'amortissement (74) pour l'amortissement de vibrations est disposé sur au moins une partie d'une surface du matériau de noyau (15) qui fait face à l'élément de recouvrement externe (2) ou à l'élément de recouvrement interne (3).

12. Dispositif à pièce polaire magnétique (1) pour un engrenage magnétique (9) selon l'une quelconque des revendications 1 à 11, dans lequel un élément d'amortissement (74) est disposé de façon à recouvrir au moins partiellement une surface externe d'au moins l'un parmi l'élément de recouvrement externe (2) ou l'élément de recouvrement interne (3).

13. Dispositif à pièce polaire magnétique (1) pour un engrenage magnétique (9) selon la revendication 10, dans lequel un élément d'amortissement (74) est disposé de façon à recouvrir au moins partiellement le matériau de noyau (15).

14. Dispositif à pièce polaire magnétique (1) pour un engrenage magnétique (3) selon l'une quelconque des revendications 1 à 8, dans lequel un espace intermédiaire (14) formé entre des supports de pièce polaire magnétique (10) adjacents dans l'espace cylindrique se présente sous la forme d'un noyau creux, et dans lequel le noyau creux communique avec l'extérieur par l'intermédiaire d'un trou de refroidissement (17) s'ouvrant le long de la direction radiale dans au moins l'un parmi l'élément de recouvrement circonférentiel externe (2) ou l'élément de recouvrement circonférentiel interne (3).

15. Dispositif à pièce polaire magnétique (1) pour un engrenage magnétique (9) selon l'une quelconque des revendications 1 à 14, dans lequel la pièce polaire magnétique inclut :
un corps de pièce polaire magnétique (41a) ; et
un second élément de recouvrement (41b) encerclant au moins partiellement le corps de pièce polaire magnétique.

16. Dispositif à pièce polaire magnétique (1) pour un engrenage magnétique (9) selon l'une quelconque des revendications 1 à 15, dans lequel une direction des fibres du plastique renforcé par des fibres de carbone constituant au moins une partie de l'élément de recouvrement externe (2), de l'élément de recouvrement interne (3) et de l'élément de paroi (20) est établie de telle sorte que le coe5icient de dilatation thermique soit proche de celui de la pièce polaire magnétique.

17. Engrenage magnétique (9), comprenant :
le dispositif à pièce polaire magnétique (1) selon l'une quelconque des revendications 1 à 16 ; un champ magnétique côté diamètre interne disposé sur un côté circonférentiel interne du dispositif à pièce polaire magnétique (1) ; et un champ magnétique côté diamètre externe disposé sur un côté circonférentiel externe du dispositif à pièce polaire magnétique (1).

18. Procédé de production d'un dispositif à pièce polaire magnétique (1) pour un engrenage magnétique (9) incluant :
un élément de recouvrement circonférentiel externe (2) et un élément de recouvrement circonférentiel interne (3) disposés de manière coaxiale sur un côté externe et un côté interne dans une direction radiale d'un engrenage magnétique (9), respectivement, et ayant chacun une forme cylindrique ;
un support de pièce polaire magnétique (10) formé par le cloisonnement d'un espace cylindrique formé entre une surface circonférentielle interne de l'élément de recouvrement circonférentiel externe (2) et une surface circonférentielle externe de l'élément de recouvrement circonférentiel interne (3) par des éléments de paroi (20) s'étendant le long de la direction radiale ; et
une pièce polaire magnétique (41) portée par le support de pièce polaire magnétique (10), dans lequel l'élément de recouvrement circonférentiel interne (2), l'élément de recouvrement circonférentiel externe (2) et les éléments de paroi (20) sont configurés d'un seul tenant, et
dans lequel l'élément de recouvrement circonférentiel externe (2) et l'élément de recouvrement circonférentiel interne (3) sont fixés entre deux plaques d'extrémité de rotor (11) par l'intermédiaire d'un élément de liaison (13) noyé dans des éléments pleins (12) respectifs disposés dans l'espace cylindrique sur les deux côtés dans une direction axiale de l'engrenage magnétique (9), et
dans lequel chacun des éléments pleins (12) est configuré pour remplir un espace encerclé par une surface circonférentielle interne de l'élément de recouvrement circonférentiel externe (2), une surface circonférentielle externe de l'élément de recouvrement circonférentiel interne (3) et une surface d'extrémité de chacune des plaques d'extrémité de rotor (11),
dans lequel le procédé comprend :
une étape de formation de l'un parmi l'élément de recouvrement circonférentiel externe (2) ou l'élément de recouvrement circonférentiel interne (3) d'un seul tenant avec les éléments de paroi (20) pour produire un premier produit moulé intermédiaire ;
une étape d'insertion de la pièce polaire magnétique (41) dans un évidement formé entre les éléments de paroi adjacents du premier produit moulé intermédiaire pour produire un second produit moulé intermédiaire ; et
une étape de montage de l'autre parmi l'élément de recouvrement circonférentiel externe (2) ou l'élément de recouvrement circonférentiel interne (3) sur le second produit moulé intermédiaire pour être formés d'un seul tenant.

19. Procédé de production d'un dispositif à pièce polaire magnétique (1) pour un engrenage magnétique (9) selon la revendication 18, dans lequel le second produit moulé intermédiaire est produit par la formation d'un seul tenant de l'un parmi l'élément de recouvrement circonférentiel externe (2) ou l'élément de recouvrement circonférentiel interne (3) avec les éléments de paroi (20) et la pièce polaire magnétique (41) lorsque le premier produit moulé intermédiaire est formé d'un seul tenant.
